# EUROPEAN PATENT SPECIFICATION

(11) **EP 4 604 501 B1**
(45) Date of publication and mention of the grant of the patent: **26.08.2026**
(21) Application number: 22964007.3
(22) Date of filing: 04.11.2022
(51) Int. Cl.: H04L 69/30, H04W 80/00

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(43) Date of publication of application: 20.08.2025
(73) Proprietor: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WU, Jianjun, Shenzhen, Guangdong 518129 (CN)
(74) Representative: Grünecker Patent- und Rechtsanwälte PartG mbB
(86) International application number: PCT/CN2022/129795
(87) International publication number: WO 2024/092697

(56) References cited:
- WO-A1-2021/152369
- CN-A- 103 763 314
- CN-A- 108 156 633
- CN-A- 110 366 258
- CN-A- 111 224 707
- CN-A- 112 135 329
- CN-A- 114 630 341
- "LTE- The UMTS Long Term Evolution", 20 February 2009, JOHN WILEY & SONS, LTD, Chichester, UK, ISBN: 978-0-47-069716-0, article PATRICK FISCHER ET AL: "User Plane Protocols", pages: 79 - 110, XP055115879, DOI: 10.1002/9780470742891.ch4
- YUAN ZENGWEN ET AL: "A Machine Learning Based Approach to Mobile Network Analysis", 2018 27TH INTERNATIONAL CONFERENCE ON COMPUTER COMMUNICATION AND NETWORKS (ICCCN), IEEE, 30 July 2018 (2018-07-30), pages 1 - 9, XP033418035, DOI: 10.1109/ICCCN.2018.8487371

## Description

### TECHNICAL FIELD

This application relates to the communication field, and in particular, to a communication method, apparatus, and system.

### BACKGROUND

Data is generated, flowed, and consumed in a communication network. With development of a network scale, a new technology, an application, and the like, increasingly more data in the network is increasingly important. Therefore, a complete service architecture is needed for efficient use of the data In the past, data exists in a form of data silos. To be specific, an application uses only its own data and cannot use data of other applications or provide the data obtained by the application for other applications for use. A data service is to break data silos, so that data can be used by applications inside and outside the network as a service, and a value of the data can be brought into play. Patrick Fischer ET AL: "User Plane Protocols", In: "LTE- The UMTS Long Term Evolution", 20 February 2009, (2009-02-20), John Wiley & Sons, Ltd, Chichester, UK, pages 79-110, disclose user plane protocols for a user plane architecture in that each layer receives a Service Data Unit (SDU) from a higher layer and an RLC layer receives packets from a PDCP layer. YUAN ZENGWEN ET AL: "A Machine Learning Based Approach to Mobile Network Analysis", 2018 27TH INTERNATIONAL CONFERENCE ON COMPUTER COMMUNICATION AND NETWORKS (ICCCN), IEEE, 30 July 2018 (2018-07-30), pages 1-9, disclose a device-centric machine learning based approach to automated mobile network analysis based on local control plane and data plane analysis.

Currently, a communication path needs to be established for information exchange between two network nodes. An intermediate node on the communication path is only responsible for forwarding a data packet, and does not process the data packet. However, as a data volume increases sharply, how to process data in each node is a problem that needs to be considered.

### SUMMARY

This application provides a communication method, apparatus, and system, so that each node on a data flow path can process data, thereby improving a data processing capability of the node and improving data processing efficiency.

According to a first aspect, a communication method is provided. The method may be applied to a first communication apparatus. A packet data convergence protocol layer and a data processing layer are deployed in the first communication apparatus. The method includes: A packet data convergence protocol layer and a data processing layer are deployed in the first communication apparatus, and the method includes: receiving first data, where the first data belongs to data plane data; processing the first data through the data processing layer, to obtain second data; sending the second data to the packet data convergence protocol layer through the data processing layer; and sending third data, where the third data is obtained by processing the second data through at least the packet data convergence protocol layer. The processing the first data through the data processing layer comprises: performing at least one of the following through the data processing layer: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, pushing and updating of a data protection technology, mapping between a data service task and a radio bearer, or data packet compression or privacy preserving of the first data; or performing at least one of the following through the data processing layer: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, pushing and updating of a data protection technology, or mapping between a data service task and a radio bearer, and at least compression or privacy preserving is performed on the second data through the PDCP layer; or performing at least one of the following through the data processing layer: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, or pushing and updating of a data protection technology. A service data adaptation protocol, SDAP, layer is further deployed in the first communication apparatus, the SDAP layer is located below the data processing layer and above the PDCP layer, and the method further comprises performing mapping between a data service task and a radio bearer through the SDAP layer and sending, through the SDAP layer, the second data obtained through processing through the SDAP layer to the PDCP layer.

In the method, the packet data convergence protocol layer and the data processing layer are deployed to process data. In addition, these protocol layers may be deployed on each node on a data flow path, so that each node has a data processing capability and supports on-path data processing, thereby improving data processing efficiency.

In one design, the foregoing functions are all implemented by the data processing layer. In the other design, the data compression and/or privacy preserving function is implemented through the packet convergence protocol layer, and the other functions are implemented through the data processing layer.

In some implementations, compression and/or privacy preserving on the second data are/is performed through the packet data convergence protocol layer.

This implementation provides another possible protocol layer design. Compared with the foregoing implementation, the protocol layer in this implementation includes the service data adaptation protocol layer. The mapping between the data service task and the radio bearer may be completed by the service data adaptation protocol layer, the data compression and/or privacy preserving may be completed by the packet data convergence protocol layer, and the other functions may be completed by the data processing layer.

In some implementations, a radio link control layer, a media access control layer, and a physical layer are further deployed in the first communication apparatus. That the third data is obtained by processing the second data through at least the packet data convergence protocol layer includes: The third data is obtained by processing the second data through the packet data convergence protocol layer, the radio link control layer, the media access control layer, and the physical layer, or the third data is obtained by processing the second data through the service data adaptation protocol layer, the packet data convergence protocol layer, the radio link control layer, the media access control layer, and the physical layer.

According to a second aspect, a communication method is provided. The method may be applied to a second communication apparatus. A packet data convergence protocol layer, a data processing layer, and a physical layer are deployed in the second communication apparatus. The method includes: receiving third data, and processing the third data through at least the PHY layer to obtain fourth data; processing the fourth data through the packet data convergence protocol layer, to obtain fifth data; sending the fifth data to the data processing layer through the packet data convergence protocol layer; and processing the fifth data through the data processing layer. The processing the fifth data through the data processing layer comprises: performing at least one of the following through the data processing layer: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, mapping between a data service task and a radio bearer, or at least compression or privacy preserving on the fifth data; or performing at least one of the following through the data processing layer: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, or pushing and updating of a data protection technology. A service data adaptation protocol, SDAP, layer is further deployed in the second communication apparatus, the SDAP layer is located below the data processing layer and above the PDCP layer, and the method further comprises performing mapping between a data service task and a radio bearer through the SDAP layer.

It should be understood that the second communication apparatus may be an apparatus that interacts with a first communication apparatus. Herein, an example in which the first communication apparatus sends data to the second communication apparatus is used for description. However, this application is not limited thereto.

In the method, the second communication apparatus may process received data through the packet data convergence protocol layer and the data processing layer that are deployed, to complete data flowing. On a data flow path, both the first communication apparatus and the second communication apparatus have a data processing capability, thereby improving data processing efficiency.

In some implementations, the processing the fourth data through the packet data convergence protocol layer includes: performing compression and/or privacy preserving on the fourth data through the packet data convergence protocol layer; and the processing the fifth data through the data processing layer includes: performing at least one of the following through the data processing layer: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, or mapping between a data service task and a radio bearer.

In other words, in this implementation, the data compression and/or privacy preserving are completed by the packet data convergence protocol layer, and the other data processing functions are implemented by the data processing layer.

In some implementations, a radio link control layer and a media access control layer are further deployed in the second communication apparatus, and the processing the third data through at least the PHY layer to obtain fourth data includes: processing the third data through the physical layer, the media access control layer, and the radio link control layer, to obtain the fourth data.

According to a third aspect, a communication apparatus is provided. The apparatus includes a processor. The processor is coupled to a memory, and may be configured to execute instructions in the memory, to implement the method according to any one of the first aspect, the second aspect, or the possible implementations of the first aspect or the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first communication apparatus. The first communication apparatus may be a functional network element in a network, may be a chip or a circuit in a terminal device, a network device, a core network device, or an operation, administration and maintenance device, or may be a logical module or software that can implement all or some functions of the terminal device, the network device, the core network device, or the operation, administration and maintenance device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a fourth aspect, a computer-readable storage medium is provided. The computer-readable storage medium stores a computer program (which may also be referred to as code or instructions). When the computer program is run on a computer, the computer is enabled to perform the method according to any one of the first aspect, the second aspect, or the possible implementations of the first aspect or the second aspect.

According to an fifth aspect, a computer program product is provided. The computer program product includes a computer program (which may also be referred to as code or instructions). When the computer program is run, a computer is enabled to perform the method according to any one of the first aspect, the second aspect, or the possible implementation of the first aspect or the second aspect.

### BRIEF DESCRIPTION OF DRAWINGS

FIG. 1 is a diagram of an architecture of a communication system according to an embodiment of this application;
FIG. 2 is a diagram of a data service architecture according to an embodiment of this application;
FIG. 3 is a diagram of a function of a data service architecture according to an embodiment of this application;
FIG. 4 is a diagram of an operation chain according to an embodiment of this application;
FIG. 5a to FIG. 5d are diagrams of some network architectures according to embodiments of this application;
FIG. 6 is a block diagram of a communication protocol stack;
FIG. 7 is a diagram of a network architecture;
FIG. 8 is a diagram of a communication protocol stack according to an embodiment of this application;
FIG. 9 is a diagram of data processing according to an embodiment of this application;
FIG. 10 is a diagram of a data flow direction according to an embodiment of this application;
FIG. 11 is a diagram of another communication protocol stack according to an embodiment of this application;
FIG. 12 is a diagram of a communication method according to an embodiment of this application;
FIG. 13 is a diagram of a communication procedure according to an embodiment of this application;
FIG. 14 is a diagram of another communication procedure according to an embodiment of this application;
FIG. 15 is a block diagram of a communication apparatus according to an embodiment of this application;
FIG. 16 is a diagram of a structure of a communication apparatus according to an embodiment of this application;
FIG. 17 is a diagram of a structure of another communication apparatus according to an embodiment of this application; and protocol function unit, the radio link control function unit, the media access control function unit, and the physical function unit.

In some implementations, the media access control function unit is configured to perform at least one of the following: mapping between a data plane logical channel and a transport channel, air interface resource scheduling of a data plane logical channel, priority control, or data multiplexing or demultiplexing for a data plane logical channel.

It should be understood that, the third aspect is an implementation on an apparatus side corresponding to the first aspect. Supplements, explanations, and descriptions of beneficial effects of the first aspect are also applicable to the third aspect. Details are not described again.

According to a fourth aspect, a communication apparatus is provided. The communication apparatus includes a transceiver unit, a physical function unit, a packet data convergence protocol function unit, and a data processing function unit, where the transceiver unit is configured to receive third data; the packet data convergence protocol function unit is configured to process fourth data to obtain fifth data, where the fourth data is obtained by processing the third data through at least the physical function unit; and the packet data convergence protocol function unit is further configured to send the fifth data to the data processing function unit; and the data processing function unit is further configured to process the fifth data.

In some implementations, the packet data convergence protocol function unit is configured to perform compression and/or privacy preserving on the fourth data. That the data processing function unit is configured to process the fifth data includes: performing at least one of the following through the data processing function unit:
routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, or mapping between a data service task and a radio bearer.

In some implementations, that the data processing function unit is configured to process the fifth data includes: The data processing function unit is configured to perform at least one of the following: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, mapping between a data service task and a radio bearer, or compression and/or privacy preserving on the fifth data.

In some implementations, a service data adaptation protocol function unit is further deployed in the second communication apparatus, where the service data adaptation protocol function unit is configured to perform mapping between a data service task and a radio bearer.

In some implementations, that the data processing function unit is configured to process the fifth data includes:

The data processing function unit is configured to perform at least one of the following: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, or pushing and updating of a data protection technology.

In some implementations, that the packet data convergence protocol function unit is configured to process the fourth data includes: The packet data convergence protocol function unit is configured to perform compression and/or privacy preserving on the fourth data.

In some implementations, a radio link control function unit and a media access control function unit are further deployed in the second communication apparatus, and that the fourth data is obtained by processing the third data through at least the physical function unit includes:

The fourth data is obtained by processing the third data through the physical function unit, the media access control function unit, and the radio link control function unit.

In some implementations, the media access function unit is configured to perform at least one of the following on the third data: mapping between a data plane logical channel and a transport channel, air interface resource scheduling of a data plane logical channel, priority control, or data multiplexing or demultiplexing for a data plane logical channel.

It should be understood that, the fourth aspect is an implementation on an apparatus side corresponding to the second aspect. Supplements, explanations, and descriptions of beneficial effects of the second aspect are also applicable to the fourth aspect. Details are not described again.

According to a fifth aspect, a communication apparatus is provided. The communication apparatus includes a processing unit and a transceiver unit. The transceiver unit is configured to receive first data, where the first data belongs to data plane data. The processing unit is configured to process the first data to obtain second data. The transceiver unit is further configured to send third data, where the third data is obtained by processing the second data.

In some implementations, the processing unit is configured to perform at least one of the following: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, pushing and updating of a data protection technology, mapping between a data service task and a radio bearer, or data packet compression or privacy preserving of the first data.

In some implementations, the processing unit is further configured to perform mapping between a data plane logical channel and a transport channel, air interface resource scheduling of a data plane logical channel, priority control, or data multiplexing or demultiplexing for a data plane logical channel.

It should be understood that, the fifth aspect is an implementation on an apparatus side corresponding to the first aspect. Supplements, explanations, and descriptions of beneficial effects of the first aspect are also applicable to the fifth aspect. Details are not described again.

According to a sixth aspect, a communication apparatus is provided. The communication apparatus includes a processing unit and a transceiver unit. The transceiver unit is configured to receive third data, and the processing unit is configured to process the third data.

In some implementations, the processing unit is configured to perform at least one of the following: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, mapping between a data service task and a radio bearer, or compression and/or privacy preserving on the fifth data.

In some implementations, the processing unit is further configured to perform mapping between a data plane logical channel and a transport channel, air interface resource scheduling of a data plane logical channel, priority control, or data multiplexing or demultiplexing for a data plane logical channel.

The fifth data is processed third data.

It should be understood that, the sixth aspect is an implementation on an apparatus side corresponding to the second aspect. Supplements, explanations, and descriptions of beneficial effects of the second aspect are also applicable to the sixth aspect. Details are not described again.

According to a seventh aspect, a communication apparatus is provided. The apparatus includes a processor. The processor is coupled to a memory, and may be configured to execute instructions in the memory, to implement the method according to any one of the first aspect, the second aspect, or the possible implementations of the first aspect or the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first communication apparatus. The first communication apparatus may be a functional network element in a network, may be a chip or a circuit in a terminal device, a network device, a core network device, or an operation, administration and maintenance device, or may be a logical module or software that can implement all or some functions of the terminal device, the network device, the core network device, or the operation, administration and maintenance device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a communication apparatus is provided. The apparatus includes a logic circuit and an input/output interface. The logic circuit is coupled to the input/output interface, and is configured to transmit data through the input/output interface, to perform the method according to any one of the first aspect, the second aspect, or the possible implementations of the first aspect or the second aspect.

According to a ninth aspect, a communication system is provided. The system includes a first communication apparatus and a second communication apparatus. The first communication apparatus receives first data, where the first data belongs to data plane data, and processes the first data through a data processing layer to obtain second data. The first communication apparatus sends the second data to a packet data convergence protocol layer through the data processing layer. The first communication apparatus sends third data to the second communication apparatus, where the third data is obtained by processing the second data through at least the packet data convergence protocol layer. The second communication apparatus receives third data, and processes fourth data through the packet data convergence protocol layer, to obtain fifth data, where the fourth data is processed third data; sends the fifth data to the data processing layer through the packet data convergence protocol layer; and processes the fifth data through the data processing layer.

According to a tenth aspect, a computer-readable storage medium is provided. The computer-readable storage medium stores a computer program (which may also be referred to as code or instructions). When the computer program is run on a computer, the computer is enabled to perform the method according to any one of the first aspect, the second aspect, or the possible implementations of the first aspect or the second aspect.

According to an eleventh aspect, a computer program product is provided. The computer program product includes a computer program (which may also be referred to as code or instructions). When the computer program is run, a computer is enabled to perform the method according to any one of the first aspect, the second aspect, or the possible implementation of the first aspect or the second aspect.

According to a twelfth aspect, a communication apparatus is provided. The communication apparatus includes a function or a module configured to perform the method according to any one of the first aspect, the second aspect, or the possible implementations of the first aspect or the second aspect.

### BRIEF DESCRIPTION OF DRAWINGS

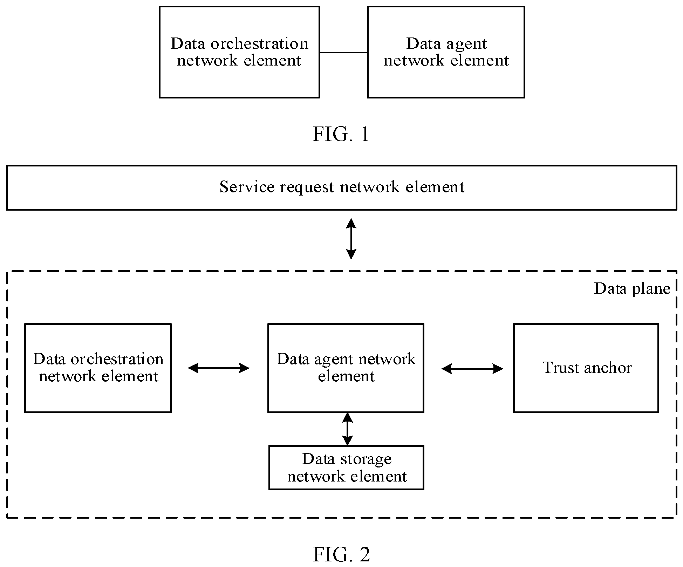

FIG. 1 is a diagram of an architecture of a communication system according to an embodiment of this application;
FIG. 2 is a diagram of a data service architecture according to an embodiment of this application;

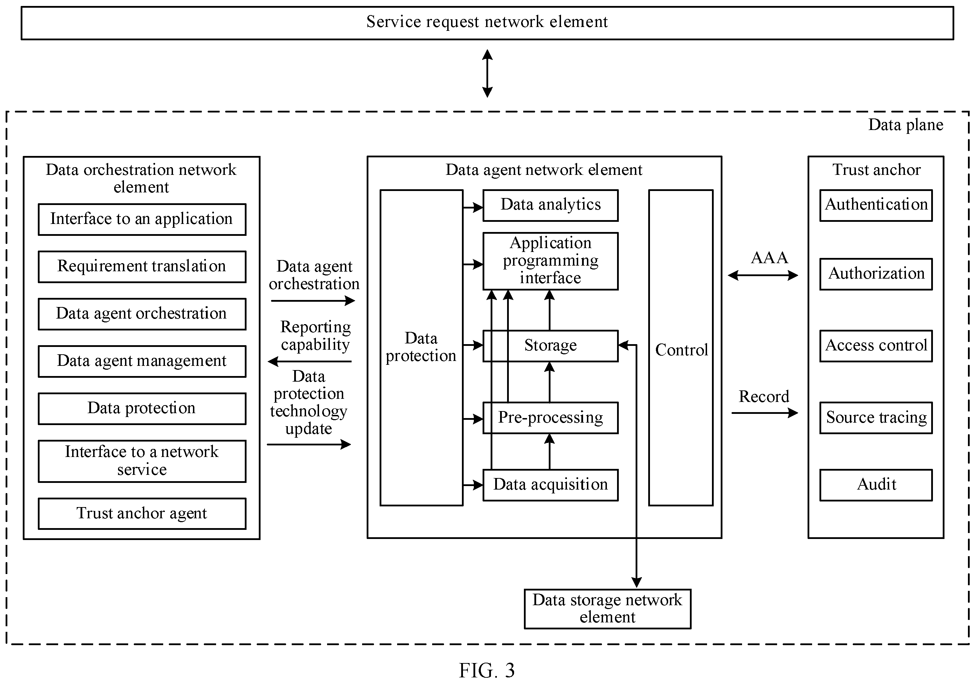

FIG. 3 is a diagram of a function of a data service architecture according to an embodiment of this application;

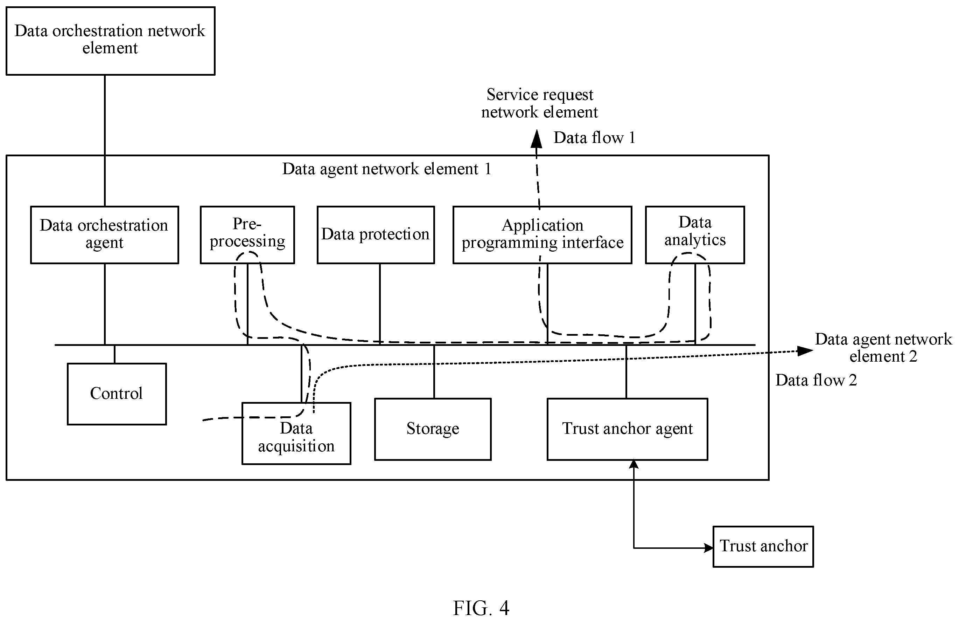

FIG. 4 is a diagram of an operation chain according to an embodiment of this application;

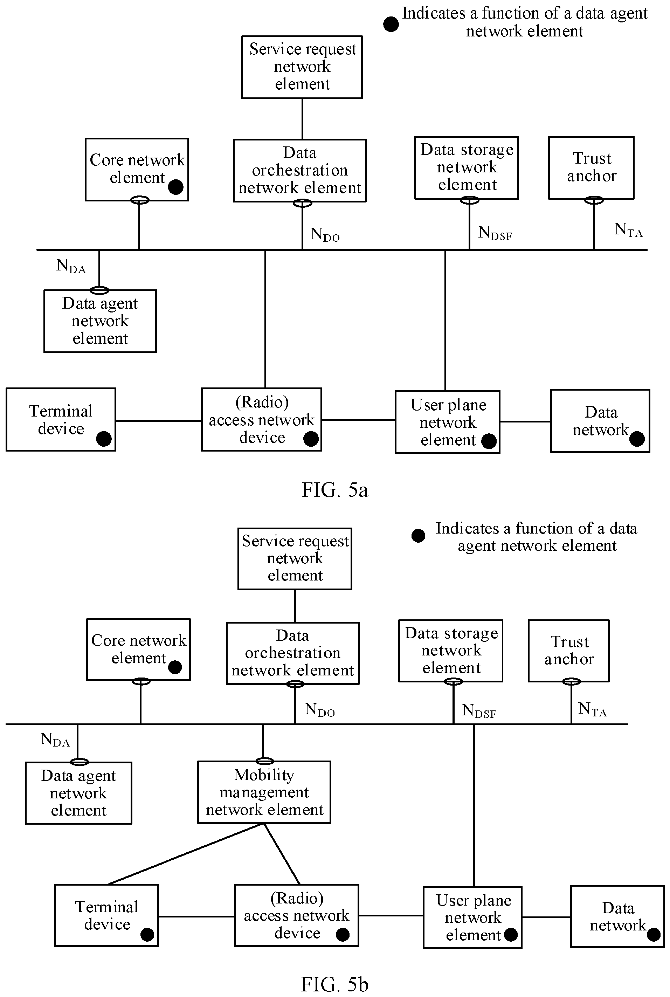

FIG. 5a to FIG. 5d are diagrams of some network architectures according to embodiments of this application;

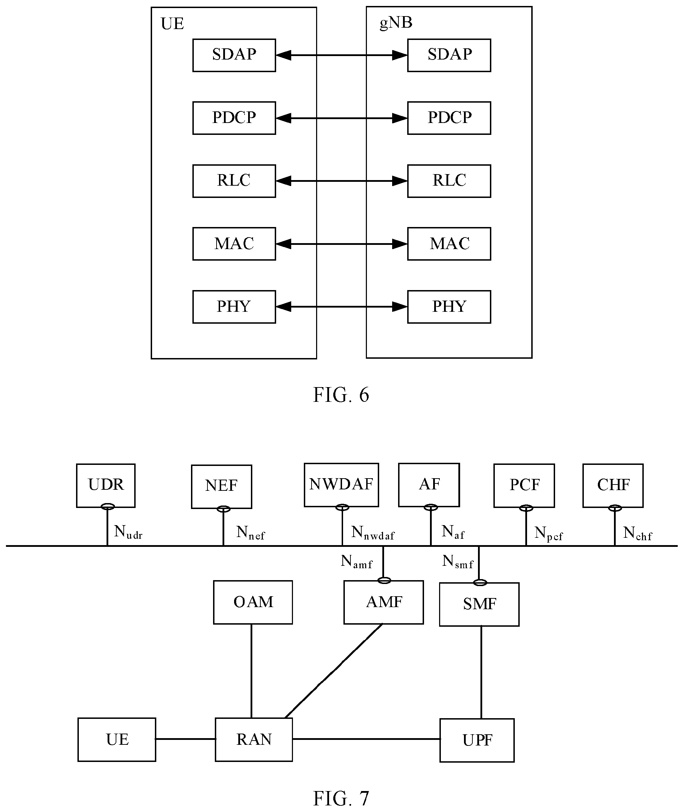

FIG. 6 is a block diagram of a communication protocol stack;
FIG. 7 is a diagram of a network architecture;

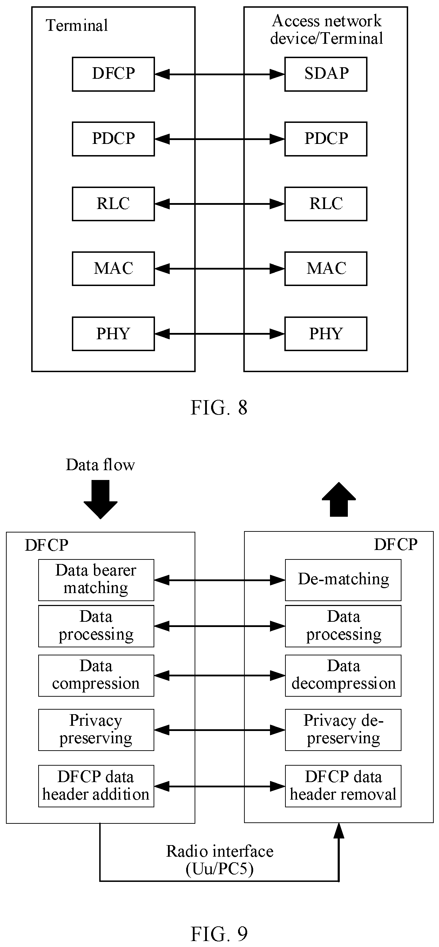

FIG. 8 is a diagram of a communication protocol stack according to an embodiment of this application;
FIG. 9 is a diagram of data processing according to an embodiment of this application;

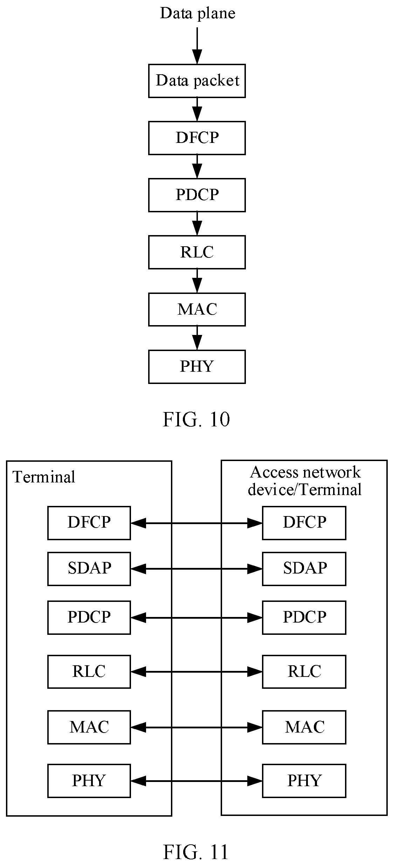

FIG. 10 is a diagram of a data flow direction according to an embodiment of this application;
FIG. 11 is a diagram of another communication protocol stack according to an embodiment of this application;

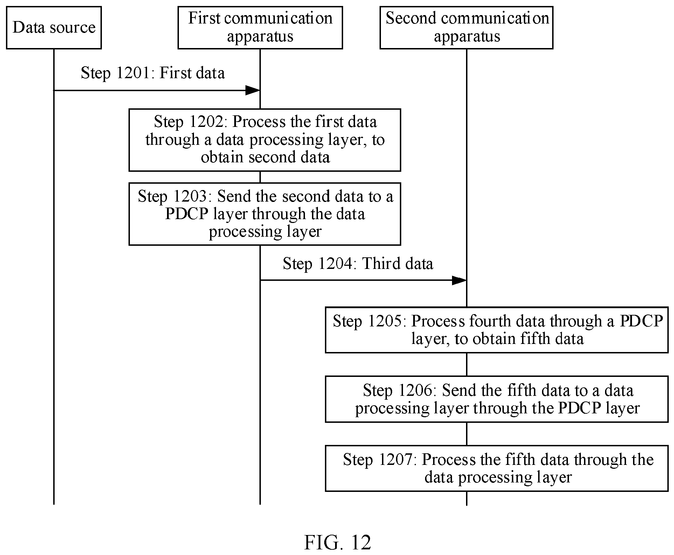

FIG. 12 is a diagram of a communication method according to an embodiment of this application;

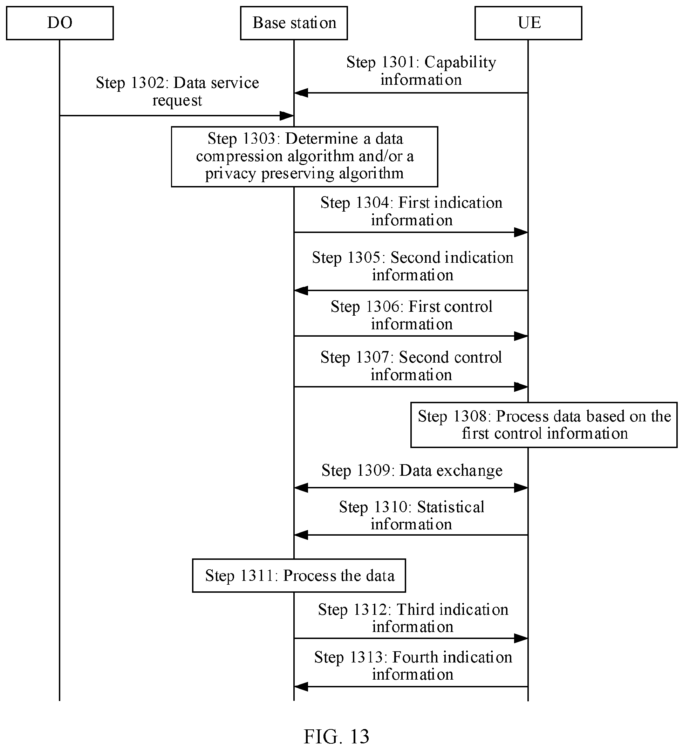

FIG. 13 is a diagram of a communication procedure according to an embodiment of this application;

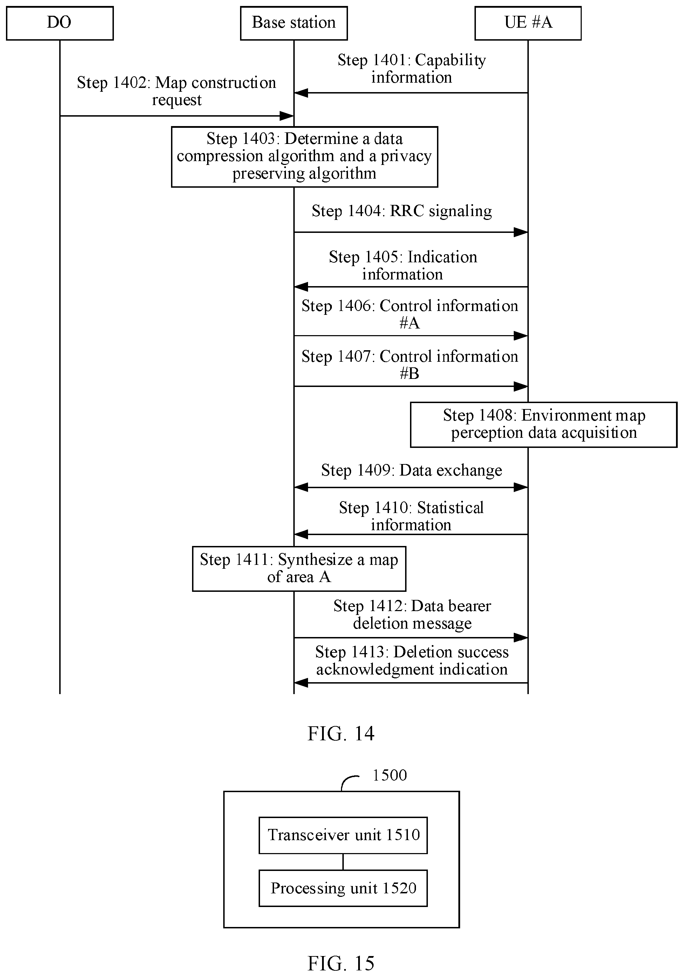

FIG. 14 is a diagram of another communication procedure according to an embodiment of this application;
FIG. 15 is a block diagram of a communication apparatus according to an embodiment of this application;

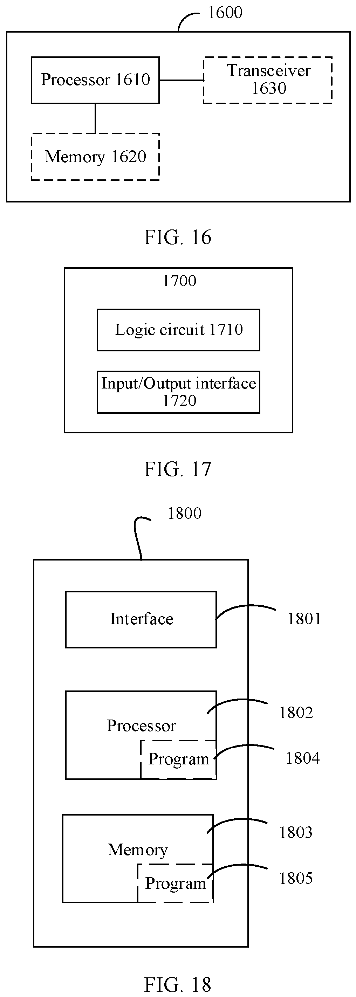

FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of still another communication apparatus according to an embodiment of this application.

### DESCRIPTION OF EMBODIMENTS

The following describes technical solutions of this application with reference to accompanying drawings.

It should be understood that the network architecture and the service scenarios described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

The network architecture and the service scenarios described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 1 is first used as an example to describe in detail a communication system applicable to embodiments of this application. For example, FIG. 1 is a diagram of an architecture of a communication system to which a communication method according to an embodiment of this application is applicable.

As shown in FIG. 1, the communication system includes a data orchestration (data orchestration, DO) network element and a data agent (data agent, DA) network element. There may be one or more data orchestration network elements, and there may be one or more data agent network elements.

It needs to be noted that the network element may be a logical entity or a physical entity. In embodiments of this application, a "device" and a "network element" may be used exchangeably for description. This is uniformly described herein, and details are not described below again.

The data orchestration network element may obtain a service request, translate the service request into service requirements on data, determine data agent network elements for implementing the service requirements, and orchestrate functions of the data agent network elements, so that the data agent network elements perform corresponding operations and establish a dynamic logical network topology, to implement the corresponding service requirements.

For example, the data orchestration network elements may be deployed in any core network (core network, CN) device, transfer network (transfer network, TN) device, or access network (radio access network, RAN) device, or another device/network element (for example, an operation, administration, and maintenance (operation administration and maintenance, OAM) network elements, or the like). Alternatively, the data orchestration network element may be deployed independently. For example, the data orchestration network element may be hierarchically deployed on a CN or RAN device side. The data orchestration network element may be deployed in a network service (network service, NS) network element. For another example, the data orchestration network element may be independently deployed in a network as a network function (network function, NF) or a network element. In actual deployment, one or more NFs may form one network element.

The data agent network element may implement one or more of the following functions: data acquisition, pre-processing, storage, analytics, data protection, and the like. Different data agent network elements may have a same data service capability or different data service capabilities, and may implement a same function or different functions. The data agent network element may interact with the data orchestration network element, to obtain a related operation that needs to be performed to meet a service requirement, and perform the operation. The data agent network elements may establish the logical network topology to form a dynamic data pipeline (data pipeline) (or referred to as a data flow, service logic, a function chain, an operation chain, or the like). The data pipeline includes the functions corresponding to the one or more data agent network elements based on the service requirements, and an output of a former function is an input of a latter function, to implement a corresponding data service.

The data agent network element may be deployed in any core network device, transfer network device, terminal device, or access network device, or another device/network element (for example, an OAM device). Alternatively, the data agent network element may be independently deployed. For example, the data agent network element may be independently deployed in a network as a network function NF or a network element.

For example, the data agent network element may be evolved from a network data analytics function (network data analytics function, NWDAF) network element, and can implement a function of the NWDAF network element, a scenario case implemented based on the NWDAF network element, and the like.

Optionally, the data agent network element may be optionally deployed in any core network device, transfer network device, terminal device, or access network device, or another network element based on a resource and/or a capability of the network element, to implement cross-domain data acquisition. The data agent network element may acquire data from a full domain, to implement cross-domain data management and collaboration.

For example, as a network function NF, the data agent network element can match cloud native SBI encryption, NF dynamic instantiation, and a K8S deployment encryption environment. In addition, impact on a performance loss and security of the NF can be minimized.

When there are a plurality of data agent network elements in the communication system, some data agent network elements may be built in a network device (which is any core network device, terminal device, or access network device, or another network element), and some data agent network elements are independently deployed; the plurality of data agent network elements are all built in a network device; or the plurality of data agent network elements are all independently deployed. This is not limited in this application.

It needs to be noted that the data orchestration network element may be a logical entity or a physical entity, and the data agent network element may be a logical entity or a physical entity. This is not limited in this application.

For example, the data agent network element may be deployed in a centralized manner or in a distributed manner.

The data agent network element is flexibly deployed in a distributed and on-demand manner, which can meet diversified and flexible data service requirements and reduce data acquisition overheads.

The core network device is located on a network side of the communication system, and may be configured to provide a network service for the access network device, the terminal device, and the like. The core network device may include but is not limited to one or more of the following: a mobility management network element, a session management network element, a user plane network element, a policy control network element, a network exposure network element, an application network element, the NWDAF network element, and/or an OAM device.

The NWDAF network element may be configured to: collect data from a core network and an OAM device, and feed back a data analytics result to an NF network element, an AF network element, or the OAM device. For example, the NWDAF network element may acquire OAM data from the OAM device, and collect non-OAM data from the NF network element or the AF network element in the core network. The non-OAM data may include non-OAM data collected at levels of a terminal device, a terminal device group, and a service.

The OAM device may collect data from the access network device.

The access network device may also be referred to as an access device or a radio access network device. The access network device can manage a radio resource, provide an access service for a terminal device, and complete data forwarding between a terminal device and a core network. The access network device may also be understood as a base station in a network.

For example, the access network device in embodiments of this application may be any communication device that has a wireless transceiver function and that is configured to communicate with the terminal device. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a next generation base station in a 6th generation (6th generation, 6G) mobile communication system, an access network device or a module of an access network device in an open access network (open RAN, ORAN) system, a base station in a future mobile communication system or an access node in a wireless fidelity (wireless fidelity, Wi-Fi) system, a baseband unit (baseBand unit, BBU), an access point (access point, AP) in a Wi-Fi system, a wireless relay node, a wireless backhaul node, a transmission point (transmission point, TP), a transmission and reception point (transmission and reception point, TRP), or the like, may be a gNB in 5G, for example, an NR system, a transmission point (TRP or TP), or one antenna panel or a group of antenna panels (including a plurality of antenna panels) of a base station in the 5G system, may be a network node that forms a gNB or a transmission point, for example, a baseband unit (BBU) or a distributed unit (distributed unit, DU), or may be a satellite, an uncrewed aerial vehicle, or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network, or the CU may be classified as an access network device in the core network. This is not limited in this application. In the ORAN system, the CU may also be referred to as an O-CU, the DU may also be referred to as an open (open, O)-DU, a CU-user plane (user plane, UP) may also be referred to as an O-CU-CP, the CU-UP may also be referred to as an O-CUP-UP, and a radio unit (radio unit, RU) may also be referred to as an O-RU.

The terminal device is a terminal that accesses the communication system and has a wireless transceiver function, or a chip or a chip system that may be disposed in the terminal. In this application, the terminal device may also be referred to as a terminal, a user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), an uncrewed aerial vehicle, a computer having a wireless transceiver function, customer premise equipment (customer premise equipment, CPE), a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device, or unmanned aerial vehicle connected to a wireless modem, a terminal in the 5G network, a terminal in a future evolved network, or the like.

For another example, the terminal device in this application may be an express delivery terminal (for example, a device that can monitor a location of a cargo vehicle, or a device that can monitor a temperature and humidity of a cargo) in intelligent logistics, a wireless terminal (for example, a wearable device that can acquire related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted part, a vehicle-mounted chip, or a vehicle-mounted unit built in a vehicle as one or more parts or units, and the vehicle can implement the method in this application via the built-in vehicle-mounted module, vehicle-mounted module, vehicle-mounted part, vehicle-mounted chip, or vehicle-mounted unit. The terminal device in this application may be a smart internet of things (smart internet of things, SIoT) terminal device or a non-SIoT terminal device, and has specific computing, storage, and other capabilities. The non-SIoT terminal device may acquire data by using an internet of things gateway. For example, the non-SIoT terminal device may be a terminal with a limited computing capability, for example, a sensor with a single function. Optionally, the data agent network element may be disposed inside the SIoT terminal device, or the SIoT terminal device may implement a function of the data agent network element.

It should be understood that FIG. 1 is merely a simplified diagram of an example for ease of understanding. The communication system may further include another device, for example, a trust anchor (trust anchor, TA), a service request network element, and/or a data storage network element (for specific implementation, refer to the following corresponding descriptions in FIG. 2), which is not shown in FIG. 1.

For example, FIG. 2 is a diagram of a data service architecture according to an embodiment of this application. The communication system shown in FIG. 1 is applicable to the data service architecture shown in FIG. 2.

As shown in FIG. 2, this application proposes a case that the normalized data service architecture is constructed based on a data plane, to provide a data service for a service request network element. The data service architecture may include but is not limited to one or more of the following: a data orchestration network element, a data agent network element, a trust anchor, a service request network element, and a data storage network element.

The trust anchor may provide trusted services such as authentication, authorization, and access control (authentication, authorization, access control, AAA), which, for example, may be implemented by using a distributed ledger technology (distributed ledger technology, DLT). The trust anchor may store data that cannot be tampered with, for example, a public key, an identifier, or an index of a terminal device or a network element, transaction-related data, or important data that cannot be tampered with.

For example, the trust anchor can implement a security and privacy preserving mechanism for an entire data service procedure through data access control such as authentication, authorization, and access control, and in combination with a data security and privacy preserving technology repository, can support security and privacy preserving of the entire data service procedure, can support trusted data service requirements such as source tracing, auditability, and user data autonomous control, can support meeting requirements of data sharing and transaction on trusted mechanisms such as source tracing and auditability, can meet compliance requirements such as the personal information protection law (personal information protection law, PIPL) and the general data protection regulation (general data protection regulation, GDPR), and can provide a trusted data service. Compliance detection of user data processing can implement a decentralized verification mechanism, to avoid single-point trustworthiness and failure problems.

The service request network element may include an application, an application server, a network service NS network element, or the like. The application may be an application that is of an operator (or a communication service provider (communication service provider, CSP)) and that is used for network planning and optimization, network artificial intelligence (artificial intelligence, AI), and/or the like, or may be an application outside a mobile communication network (which may also be referred to as a third-party application). The service request network element may be independently deployed in a network as a network function or a network element.

The data storage network element can store various types of data, for example, streaming (streaming) data, batch (batch) data, log (log) information, AI model parameter configuration information, and intermediate data, and may extend a storage function of the data agent network element. For example, a data storage function (data storage function, DSF) network element may be a centralized database, or may be a distributed database, for example, a distributed hash table DHT or an interplanetary file system (interplanetary file system, IPFS). For example, the data storage network element may be the DSF network element, or may be evolved from the data storage function network element. The data storage network element may be deployed in the network as an NF or a network element.

For example, FIG. 3 is a diagram of a function of a data service architecture according to an embodiment of this application.

The following describes functions of the data orchestration network element with reference to FIG. 3.

With reference to FIG. 3, the function that can be implemented by the data orchestration network element includes but is not limited to one or more of the following: an interface with an application, requirement translation, data agent orchestration, data agent management, data protection, an interface to a network service network element, and an interface to a trust anchor.

Interface with the application: The data orchestration network element may interact with a service request network element through the interface with the application. For example, the data orchestration network element receives a service request from the service request network element. For example, the service request may be a requirement filled in according to a standard template. For example, the standard template may be a service level agreement (service level agreement, SLA).

Requirement translation: The data orchestration network element translates the service request into service requirements on functions of data agent network elements. For example, the data orchestration network element translates the requirement such as the service level agreement into a requirement on a corresponding resource and a network configuration.

Data agent orchestration: The data agent network elements are orchestrated based on data service capabilities of the data agent network elements, to form a dynamic logical network topology to meet the service requirement.

For example, the data orchestration network element translates the requirement such as the service level agreement into the requirement on the corresponding resource and the network configuration, selects, based on the data service capabilities of the data agent network elements, the data agent network elements participating in a current data service, and orchestrates the data agent network elements to form the dynamic logical network topology. Optionally, the data orchestration network element may negotiate with another network service network element in a process of performing data agent orchestration. Optionally, the data orchestration network element may dynamically specify a data agent network element that directly interacts with the service request network element, and send information about the data agent network element to the service request network element, so that the application can invoke an application programming interface (application programming interface, API) of the data agent network element, to obtain data, a processing result, or the like.

Data agent management: Request registration, deregistration, and the like requested from the data orchestration network element by a data agent network element are managed, and a data service capability and the like that are reported by the management data agent network element are received.

Data protection: A data protection function may be implemented by using a data protection technology repository (data protection technology repository, DPTR). The data protection technology repository may include a data security and privacy preserving algorithm repository, for example, a plurality of algorithms such as differential privacy, homomorphic encryption, multi-party computation, and zero-knowledge proof. The data orchestration network element may push or update information about the data protection technology repository to the data agent network element on demand, which serves as a data protection technology (data protection technology, DPT) of the data agent network element. The data protection technology repository can be loosely coupled with the data orchestration network element. The data protection technology repository can be a common capability of a network element in the data service architecture, and can be independently evolved and optimized. The independent data protection technology repository facilitates compliance detection of end-to-end (end-to-end, E2E) data processing.

For example, the information about the data protection technology repository may include an identifier, an index, and configuration information that are of the data protection technology repository, and the data protection technology repository itself.

Interface with the network service: The data orchestration network element may interact with the network service network element through the interface with the network service. For example, the data orchestration network element may negotiate with the network service network element based on a service requirement. For example, if the algorithm and the computing power need to be used, the data orchestration network element may collaborate with the another network service network element.

Trust anchor agent: The trust anchor agent is an interface between the data orchestration network element and the trust anchor. The data orchestration network element may interact with the trust anchor by using a trust anchor agent function.

It needs to be noted that, in embodiments of this application, the data orchestration network element may be divided into functional modules based on the foregoing functions or the following method embodiments. For example, each functional module may be obtained through division based on each function, or two or more functions may be integrated into one module. The integrated module may be implemented in a form of hardware, or may be implemented in a form of a software functional module. It needs to be noted that, in embodiments of this application, the division into the functions or the modules is an example, and is merely logical function division. In actual implementation, another division manner may be used.

The following describes a function of a data agent network element with reference to FIG. 3.

With reference to FIG. 3, the function that may be implemented by the data agent network element includes but is not limited to one or more of the following: interaction with the data orchestration network element, interaction with the trust anchor, control, data acquisition, data pre-processing, data storage, an application programming interface, data analytics, and data protection.

The data agent network element may implement data service collaboration and closed-loop management by performing the foregoing function, and may output data for different processing requirements on demand.

Interaction with the data orchestration network element: The data agent network element is configured to interact with the data orchestration network element, including: sending information to the data orchestration network element, and receiving information about the data orchestration network element. This function of interacting with the data orchestration network element may be implemented by a data orchestration agent of the data orchestration network element.

Interaction with the trust anchor: The data agent network element is configured to interact with the trust anchor. This function of interacting with the trust anchor may be implemented by a trust anchor agent.

Control: Functions of the data agent network elements are orchestrated based on operations set by the data orchestration network element for the data agent network elements, to form a data pipeline. The control function may be implemented by a controller (controller) of the data orchestration network element.

For example, the data orchestration network element orchestrates the data agent network elements to form the dynamic logical network topology, and the data agent network elements orchestrate the functions of the data agent network elements to form the data pipeline, to implement automatic data management and dynamic on-demand configuration, promptly respond to a new service and a new requirement, support implementation of rich application scenarios, enable a new data service to quickly appear on a market, and shorten time to market (time to market, TTM).

Data acquisition (acquisition): Data is obtained. For example, the data may be obtained in a subscription/notification manner, or the data is obtained in a request/response manner. Optionally, the request may indicate a triggering manner, a triggering condition, a reporting periodicity, a data amount, and the like of data reporting. Optionally, the data agent network element may support flow data and batch data acquisition. Optionally, the data agent network element may support real-time data acquisition and non-real-time data acquisition. Optionally, the data agent network element may support acquisition of various data. The data may be classified into several types. For example, the data types may include but are not limited to network data, user data, AI model data, and internet of things (internet of things, IoT) data. This application does not limit data classification. The data may be classified into more or fewer types, the data may be classified from another perspective, or the data may not be classified.

In this way, data services of various types of data can be implemented by using a normalized data service architecture provided in this application.

Data pre-processing (pre-processing): The pre-processing refers to performing cleaning, filling, smoothing, combination, standardization, and consistency checking on acquired original data, field extraction of the original data, format conversion, redundant data clearing, compression, filtering, merging, and/or other operations, to improve data quality and lay a foundation for subsequent processing (for example, analytics). Eliminating the original data may cause problems such as a data loss, data noise, data redundancy, and/or dataset imbalance.

Data storage: Centralized and distributed storage is supported. Optionally, data that requires strict access protection or privacy preserving, for example, user subscription data, is stored locally in the data agent network element.

Application programming interface: Each function of the data agent network element may directly provide a service for a service requester through the application programming interface API.

Data analytics (analytics): The data analytics is loosely coupled with the data agent network element, and can be deployed separately from the data agent network element on demand. Various data analytics technologies can be supported, for example, AI training, AI inference, machine learning (machine learning, ML), and big data analytics. This data analytics function can invoke data services at levels such as data acquisition, pre-processing, and storage of the data agent network element through the API. Optionally, an AI model required in a data analytics process may be preset locally in the data agent network element or pushed by the network service network element.

Data protection: Data is processed by using technologies such as k-anonymity (k-anonymity), l-diversity (l-diversity), and differential privacy, so that attackers cannot directly obtain sensitive information from desensitized data, to implement data privacy preserving. The information about the data protection technology repository may be pre-installed in the data agent network element, or pushed by the DO on demand, and security and privacy preserving is performed on data at each level of the data agent network element.

It needs to be noted that, in embodiments of this application, the data agent network element may be divided into functional modules based on the foregoing functions or the following method embodiments. For example, each functional module may be obtained through division based on each function, or two or more functions may be integrated into one module. The integrated module may be implemented in a form of hardware, or may be implemented in a form of a software functional module. It needs to be noted that, in embodiments of this application, the division into the functions or the modules is an example, and is merely logical function division. In actual implementation, another division manner may be used.

FIG. 4 is a diagram of an operation chain. The following describes, with reference to FIG. 4, an operation chain formed by controlling functions of a data agent network element by the data agent network element.

The operation chain is formed by obtaining, by the data agent network element from the data orchestration network element, an operation that is set for the data agent network element and orchestrating the functions of the data agent network element based on the operation that is set by the data orchestration network element for the data agent network element. For example, as shown in FIG. 4, it is assumed that a data agent network element 1 obtains, from the data orchestration network element, an operation that is set for the data agent network element 1, including: performing pre-processing such as convergence on data obtained from other data agent network elements, then performing analytics to obtain an analytics result, and sending the analytics result to a service request network element. The data agent network element 1 orchestrates various functions to form an operation chain 1 shown in FIG. 4: acquiring data, performing pre-processing, analyzing a pre-processing result, and sending an analytics result to the service request network element through an application programmable interface.

For another example, as shown in FIG. 4, it is assumed that a data agent network element 1 obtains, from the data orchestration network element, an operation that is set for the data agent network element 1, including: transmitting acquired data to a data agent network element 2, and the data agent network element 1 orchestrates functions to form an operation chain 2 shown in FIG. 4: acquiring data and sending the data to the data agent network element 2.

It needs to be noted that the operation chain 1 and the operation chain 2 shown in FIG. 4 are merely examples provided in this application, and do not constitute a limitation on a sequence of performing the functions of the data agent network element. The sequence of performing the functions of the data agent network element may be dynamically adjusted based on a service requirement.

For example, FIG. 5a to FIG. 5d are diagrams of some network architectures. The communication system shown in FIG. 1 is applicable to the network architectures shown in FIG. 5a to FIG. 5d.

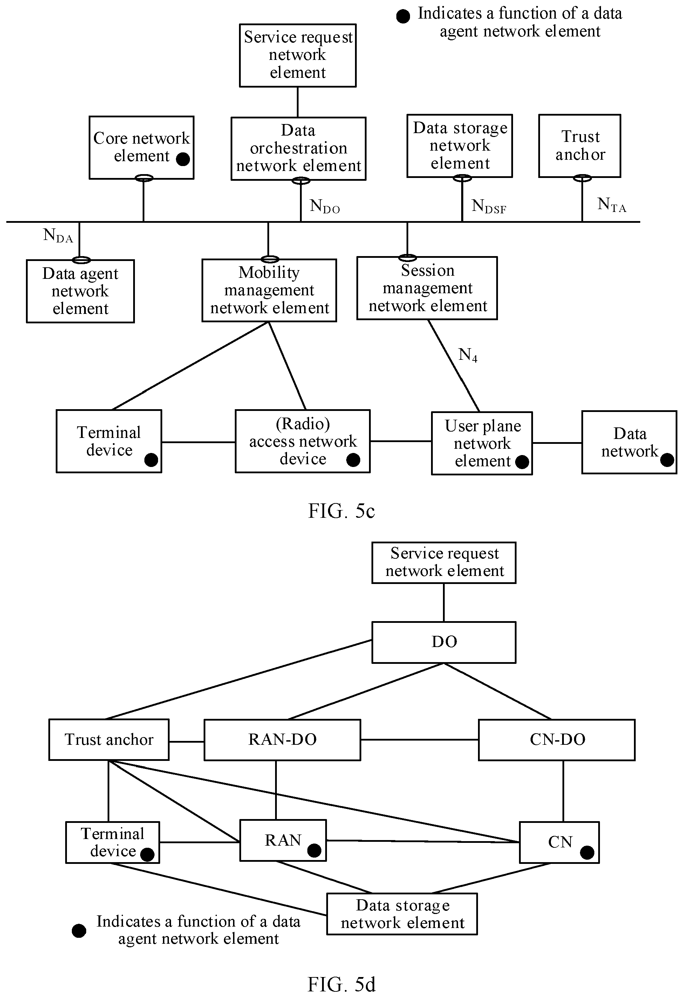

FIG. 5a is a diagram of a network architecture in which a core network device and an access network device are both service-oriented. FIG. 5b is a diagram of a network architecture in which an access network device is not service-oriented and a core network is service-oriented. FIG. 5c is a diagram of a network architecture in which an access network device is not service-oriented and a core network is service-oriented (an N4 interface is reserved). FIG. 5d is a diagram of a network architecture in which network elements are directly interconnected.

With reference to FIG. 5a to FIG. 5c, the network architectures may include but are not limited to one or more of the following: a service request network element, a terminal device, an access network device, a user plane network element, a data network element, a core network device, a data orchestration network element, a data agent network element, a data storage network element, a trust anchor. For a specific implementation, refer to the descriptions in FIG. 1 to FIG. 4. Details are not described herein again. The network architectures may further include but are not limited to a mobility management network element (FIG. 5b and FIG. 5c). The network architectures may further include but are not limited to a session management network element (FIG. 5c). The core network device shown in FIG. 5a to FIG. 5c may include any core network device other than the user plane network element, the mobility management network element, and/or the session management network element.

The data agent network element may be deployed in any network element other than the data orchestration network element, the data storage network element, and the trust anchor in the network architecture. In other words, any network element other than the data orchestration network element, the data storage network element, and the trust anchor in the network architecture may implement a function of the data agent network element.

The data orchestration network element interacts with another network element (such as the service request network element, the data agent network element, the core network device, and the trust anchor) through a service-based interface N_{DO}. The data agent network element interacts with another network element (such as the service request network element, the data orchestration network element, the core network device, the terminal device, the access network device, the data storage network element, and the trust anchor) through a service-based interface N_{DA}. The data storage network element interacts with another network element (such as the data agent network element, the core network device, the terminal device, and the access network device) through a service-based interface N_{DSF}. The trust anchor interacts with another network element (such as the data orchestration network element, the data agent network element, the core network device, the terminal device, the access network device, the data storage network element, and the trust anchor) by using a service-based interface N_{TA}.

In the network architectures shown in FIG. 5a to FIG. 5c, independence between network functions may be improved through the service-oriented interfaces, thereby implementing deployment flexibility and efficient scalability, and improving development efficiency of a new function.

With reference to FIG. 5d, the network architecture may include but is not limited to one or more of the following: a service request network element, a data orchestration network element, an access-network-domain data orchestration network element (RAN-DO), a CN-domain data orchestration network element (CN-DO), an access network device RAN, a core network device, a terminal device, a trust anchor, and a data storage network element.

In the architecture shown in FIG. 5d, the data orchestration network elements are hierarchically deployed. The data orchestration network element may manage the RAN-domain data orchestration network element and the CN-domain data orchestration network element. The RAN-domain data orchestration network element may directly interact with the CN-domain data orchestration network element. The RAN-domain data orchestration network element may directly interact with the access network device. The CN-domain data orchestration network element may directly interact with the core network device. The trust anchor may directly interact with any network element in the network architecture. The data storage network element may directly interact with the terminal device, the access network device, and the core network device.

The network elements in the network architecture shown in FIG. 5d are directly interconnected, so that backward compatibility of the architecture can be met.

It needs to be noted that the communication method provided in embodiments of this application is applicable to any two nodes shown in FIG. 1 to FIG. 5d. For a specific implementation, refer to the following method embodiments. Details are not described herein again.

It should be noted that the solutions in embodiments of this application may also be used in another communication system, and a corresponding name may also be replaced with a name of a corresponding function in the another communication system.

Communication between an access network device and a terminal device complies with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer. For example, the user plane protocol layer structure may include at least one of the following: a service data adaptation protocol (service data adaptation protocol, SDAP) layer, a PDCP layer, an RLC layer, a MAC layer, or a physical layer. FIG. 6 shows a user plane protocol stack, which is applicable to the communication systems in FIG. 1 to FIG. 5d. The protocol stack may be applied to a terminal device or an access network device. The user plane protocol stack includes the following content:
a service data adaptation protocol SDAP layer, a packet data convergence protocol PDCP layer, a radio link control RLC layer, a media access control MAC layer, and a physical PHY layer.

The SDAP layer is located above the PDCP layer, is for carrying user plane data, is responsible for mapping between a quality of service (Quality of Service, QoS) flow and a data radio bearer (Data Radio Bearer, DRB), and adds a QFI (QoS flow ID) mark to a data packet.

Main functions of the PDCP layer are as follows:
(1) user-plane header compression (a compression algorithm is determined by both a mobile phone and a base station);
(2) encryption/decryption (control plane/user plane);
(3) control-plane integrity check;
(4) sorting and replication detection; and
(5) in an Option3X in NSA networking, a PDCP of a gNodeB performs data splitting and provides a routing function.

The RLC layer is located below the PDCP layer. The entities are classified into a TM entity, a UM entity, and an AM entity. AM data transmission and reception share one entity, and transmission and reception entities of both the UM and the TM are separated. Main functions are as follows:
(1) transparent mode (Transparent Mode, TM) (a broadcast message), unacknowledged mode (Unacknowledged Mode, UM) (a voice service with a delay requirement), and acknowledged mode (Acknowledged Mode, AM) (a common service with high accuracy);
(2) fragmentation and reassembly (UM/AM, a size of a fragmented data packet is determined by the MAC, and is larger in a better radio environment and is smaller in a poorer radio environment); and
(3) error correction (high accuracy for AM and ARQ).

Main functions of the MAC layer are scheduling, including resource scheduling, mapping between logical channels and transport channels, multiplexing/demultiplexing, and hybrid automatic repeat request (Hybrid Automatic Repeat reQuest, HARQ) (uplink and downlink asynchronization).

Main functions of the PHY layer are error detection, forward error correction (Forward Error Correction, FEC) encryption and decryption, rate matching, physical channel mapping, modulation and demodulation, frequency synchronization and time synchronization, radio measurement, and MIMO processing.

Currently, a core of a 5G user plane is to establish a protocol data unit (PDU) session, to be specific, establish a session between a user terminal and a data network. However, data cannot be opened and processed on a session intermediate node. If an existing user plane is for carrying all 6G network data, it is possible that data can be terminated only on a user plane function UPF, and distributed management and control of perception data, AI data, network behavior, and status data cannot be met. Therefore, a data plane requires a new protocol stack to support a flexible data service requirement. Currently, a network data analytics function (NWDAF) network element is introduced into a 5G core network. FIG. 7 shows a network architecture including an NWDAF network element. The NWDAF collects data from a core network and an OAM, including collecting statistics related to user mobility, a load, a communication mode, QoS, and the like from a network repository and various NFs (for example, a session management function (SMF), or by using a third-party application function (AF)). The NWDAF connects a control plane, a management plane, and an application server.

For example, an existing network management data acquisition mechanism is used to acquire OAM data, including full-domain KPI data, terminal MDT data or QoE data, RAN data, and MDT data. To be specific, the NWDAF interacts with the management plane to collect statistical information of performance and fault management and air interface analytics information. The NWDAF may further collect non-OAM data from an NF or an AF of a 5G core network through event exposure, including non-OAM data at a level of a terminal, a terminal group, and a service. The NWDAF analyzes the data and directly interacts with a control plane network element to complete closed-loop capabilities of network automation and self-healing.

Optionally, the access network device may include a CU and a DU. This design may be referred to as CU and DU separation. A plurality of DUs may be controlled by one CU in a centralized manner. For example, an interface between the CU and the DU is referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, functions of protocol layers above a PDCP layer are set on the CU, and functions of the PDCP layer and protocol layers below the PDCP layer are set on the DU. This is not limited.

The division into the processing functions of the CU and the DU based on protocol layers is merely an example, and may also be other division. For example, the CU or the DU may have functions of more protocol layers through division. For another example, the CU or the DU may have some processing functions of the protocol layers through division. For example, some functions of the RLC layer and functions of protocol layers above the RLC layer are set on the CU, and remaining functions of the RLC layer and functions of protocol layers below the RLC layer are set on the DU. For another example, division into functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU.

Optionally, the CU may have one or more functions of a core network.

Optionally, a radio unit (radio unit, RU) of the DU may be disposed remotely. The RU has a radio frequency function. For example, the DU and the RU may be set at the PHY layer through division. For example, the DU may implement a higher-layer function of the PHY layer, and the RU may implement a lower-layer function of the PHY layer. When sending is performed, functions of the PHY layer may include at least one of the following: cyclic redundancy check (cyclic redundancy check, CRC) bit addition, channel coding, rate matching, scrambling, modulation, layer mapping, precoding, resource mapping, physical antenna mapping, or a radio frequency sending function. When receiving is performed, functions of the PHY layer may include at least one of the following: CRC check, channel decoding, rate de-matching, descrambling, demodulation, layer demapping, channel detection, resource demapping, physical antenna demapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include CRC bit addition, channel coding, rate matching, scrambling, modulation, and layer mapping, and the lower-layer functions of the PHY layer may include precoding, resource mapping, physical antenna mapping, and the radio frequency sending function. Alternatively, the higher-layer functions of the PHY layer may include CRC bit addition, channel coding, rate matching, scrambling, modulation, layer mapping, and precoding, and the lower-layer functions of the PHY layer may include resource mapping, physical antenna mapping, and the radio frequency sending function. For example, the higher-layer function of the PHY layer may include CRC check, channel decoding, rate de-matching, decoding, demodulation, and layer demapping, and the lower-layer function of the PHY layer may include channel detection, resource demapping, physical antenna demapping, and radio frequency receiving functions. Alternatively, the higher-layer function of the PHY layer may include CRC check, channel decoding, rate de-matching, decoding, demodulation, layer demapping, and channel detection, and the lower-layer function of the PHY layer may include resource demapping, physical antenna demapping, and radio frequency receiving functions.

Optionally, the functions of the CU may be further divided, and a control plane and a user plane are split and implemented by different entities. Split entities are a control plane CU entity (namely, a CU-CP entity) and a user plane CU entity (namely, a CU-UP entity). The CU-CP entity and the CU-UP entity may be separately connected to the DU. In this application, an entity may be understood as a module or a unit, and an existence form of the entity may be a hardware structure, a software module, or a combination of the hardware structure and the software module. This is not limited.

Optionally, any one of the CU, the CU-CP, the CU-UP, the DU, and the RU may be a software module, a hardware structure, or a combination of the software module and the hardware structure. This is not limited. Different entities may have a same existence form or may have different existence forms. For example, the CU, the CU-CP, the CU-UP, and the DU are software modules, and the RU is a hardware structure. For brevity of description, all possible combination forms are not enumerated herein. The modules and methods performed by the modules also fall within the protection scope of this application. For example, when the method in this application is performed by the access network device, the method may be specifically performed by at least one of the CU, the CU-CP, the CU-UP, the DU, or the RU.

A core of a 5G user plane is to establish a protocol data unit (PDU) session, to be specific, establish a session between a user terminal and a data network. However, data cannot be opened and processed on a session intermediate node. If an existing user plane is for carrying all 6G network data, it is possible that data can be terminated only on a user plane function UPF, and distributed management and control of perception data, AI data, network behavior, and status data cannot be met. Therefore, a data plane requires a new protocol stack to support a flexible data service requirement. Currently, a network data analytics function (NWDAF) network element is introduced into a 5G core network. FIG. 7 shows a network architecture including an NWDAF network element. The NWDAF collects data from a core network and an OAM, including collecting statistics related to user mobility, a load, a communication mode, QoS, and the like from a network repository and various NFs (for example, a session management function (SMF), or by using a third-party application function (AF)). The NWDAF connects a control plane, a management plane, and an application server.

For example, an existing network management data acquisition mechanism is used to acquire OAM data, including full-domain KPI data, terminal MDT data or QoE data, RAN data, and MDT data. To be specific, the NWDAF interacts with the management plane to collect statistical information of performance and fault management and air interface analytics information. The NWDAF may further collect non-OAM data from an NF or an AF of a 5G core network through event exposure, including non-OAM data at a level of a terminal, a terminal group, and a service. The NWDAF analyzes the data and directly interacts with a control plane network element to complete closed-loop capabilities of network automation and self-healing.

The NF, the AF, or the OAM on the 5G core network may obtain data analytics results from the NWDAF network element through a "subscription/notification" or a "request/response". The NWDAF network element can provide data analytics results at levels of terminal groups, service types, slice types, and devices.

However, types of data that the NWDAF can acquire or collect are limited. A data source of communication network covers function nodes of a UE side, a RAN side, a TN side, a CN side, and the OAM. The data that can be acquired or collected includes network data such as various network statuses and behavior, user subscription data, AI model data, IoT data, and the like acquired or collected from these nodes. The network data, especially data on the RAN side and the CN side, is content that is particularly acquired in most data service architectures at present. However, with deep integration of AI and networks and wide development of the internet of things, AI model data and IoT data will also be important data flowing on the networks. Currently, the NWDAF can collect only data of the CN and the OAM, cannot directly acquire data from the UE, the RAN, and the TN, and cannot collect AI model data and IoT data.

From a perspective of trust data services, a current data service architecture of the NWDAF provides only an authentication function between basic network functions (NF), and cannot provide trusted services such as data access control, source tracing, and audit, especially those that meet trusted service requirements of laws and regulations such as PIPL/GDPR for E2E data. The NWDAF is an application-centric monolithic architecture that features centralized deployment and single-domain intelligence, and therefore lacks a flexible distributed deployment capability. In addition, in most current data service architectures, data consumers are mostly applications inside a network. The NWDAF may support limited third-party applications. However, due to a lack of trust mechanisms such as source tracing/auditing, the NWDAF cannot support services such as data sharing, exchange, and transaction that bring benefits to data subjects.

In addition, the architecture of the NWDAF lacks full-domain data awareness and cross-domain coordination capabilities, and cannot perform collaborative processing on E2E data from a global perspective or perform global collaboration in a data processing action procedure. Therefore, data with different processing requirements cannot be output as required. The NWDAF collects data of limited types and can only implement single-domain (core network side) intelligence, lacks a capability of detecting data of various domains such as a UE domain and a RAN domain and a capability of full-domain orchestrating data, and supports limited application scenarios and cases. Currently, the NWDAF defines only a dozen of data service type IDs, which are used only for scenarios such as network optimization and customer experience improvement. In addition, a predefinition method is needed. When new services and new requirements are faced with, a new standard procedure needs to follow, which is usually implemented on a yearly basis and cannot achieve an agile response.

In addition, with the rapid and wide development of cloud computing and container technologies, IT technologies such as cloud native and containerization are deeply integrated with communication networks. Introduction of a 5G SBA architecture enhances security, including: (1) SBI encryption, where all traffic between NFs is encrypted; (2) cloud NF instantiation, which cannot be anchored on one NF; and (3) a K8S NF consisting of a plurality of PODs, where encryption can be performed between PODs. A traditional hard acquisition mode is not applicable, and built-in soft acquisition is needed. The NWDAF collects data through event reporting, which cannot meet data acquisition requirements in cloud native and a K8S environment.

With development of technologies and refinement of user requirements, a data volume in a future communication network increases greatly, which imposes a higher requirement on a data processing capability of a communication system architecture.

For the foregoing problem, an embodiment of this application provides a communication protocol stack. The communication protocol stack is applicable to a terminal device, or is applicable to a network device. In other words, the communication protocol stack is applicable to any node in a data flow phase.

FIG. 8 is a diagram of a structure of a communication protocol stack according to an embodiment of this application. The communication protocol stack includes a data processing (Data Forwarding Control Protocol, DFCP) layer, a packet data convergence protocol (PDCP) layer, a radio link control (RLC) layer, a media access control (MAC) layer, and a physical (PHY) layer. The data processing layer is located above the packet data convergence protocol layer, and the PDCP layer, the RLC layer, the MAC layer, and the PHY layer are sequentially deployed from top to bottom. Functions of the layers are as follows:

Data processing layer: completes routing and forwarding of data plane data, processing of the data plane data, parsing and reassembling of data packet headers, statistical information reporting, pushing and updating of a data protection technology, and mapping between a data service task and a radio bearer.

It should be understood that the data plane data includes data-plane control data and data-plane service data. This is not limited in embodiments of this application. For example, that the data processing layer may be configured to process data plane data may be that the data processing layer is configured to process the data-plane service data, or is configured to process the data-plane control data.

When the communication protocol stack is configured on an intermediate node of a data flow, the data processing layer may be for data forwarding. For example, data sent by a first node to a second node may be sent to a third node via the second node. When the communication protocol stack is configured on a start node of a data flow, the data processing layer may be configured to determine a route of data. For example, a first node is a start node of a data flow, and the data processing layer may be configured to obtain a route of the data flow, to complete data forwarding. For example, routing information of the data is obtained, where the route of the data is from the first node to a second node, and then the second node forwards the data to a third node. Optionally, the routing information may be determined by a DO.

It may be understood that a function of the data processing layer does not necessarily need to be implemented. For example, the data processing layer has a data forwarding capability. However, when the communication protocol stack is configured on a data target node, the data target node does not need to forward data after receiving the data.

The processing of the data plane data may be at least one of the following: data acquisition, data pre-processing, data storage, data source tracing, data sharing or transaction, data analytics, or data format confirmation. For content such as data acquisition, data pre-processing, data storage, and data analytics, refer to the foregoing descriptions. Specifically, the data acquisition may include content such as a data acquisition interval, batch data, streaming data, event reporting, and a virtual test access point (Virtual Test Access Point, VTAP), where the VTAP function is also referred to as traffic mirroring. The data pre-processing may include content such as data cleaning, data filtering, data fusion, data deduplication, and data aggregation. The data storage may include content such as centralized storage, distributed storage, storage expansion, and on-chain storage. The data source tracing may include content such as authorization, authentication, access control, source tracing, or audit. The data analytics may include content such as big data analytics, model training, model inference, a knowledge graph, and federated learning. The data format confirmation may also be referred to as a data dictionary. It should be understood that the appellation in embodiments of this application is merely an example rather than a limitation. The data dictionary may include content such as a feature dataset and a data format.

In the foregoing functions, for the statistical information reporting, statistical information may be a message or bytes received by each DA in a data service, for example, a length of bytes of data sent or received by a DA in a data service. Optionally, when the DA is a terminal, the statistical information may be reported to a network device.

The pushing and updating of the data protection technology: The data protection technology may be understood as a data protection algorithm. Optionally, the data protection algorithm may be one algorithm in a data protection algorithm repository. For example, updated information about a data security and privacy preserving technology repository and/or updated information about an analytics tool repository may be received from the data orchestration network element. Optionally, the information about the data security and privacy preserving technology repository may include but is not limited to one or more of the following: an identifier of the data security and privacy preserving technology repository, an index of the data security and privacy preserving technology repository, and the data security and privacy preserving technology repository. In other words, if the data security and privacy preserving technology repository, the analytics tool repository, and the like are updated, the data orchestration network element may push the data security and privacy preserving technology repository, the analytics tool repository, and the like to a data agent network element. In this way, data security protection, data privacy preserving, and the like can be implemented.

In a possible implementation, the data processing layer may be further configured to compress a data packet and perform privacy preserving. Optionally, a data packet compression algorithm and a privacy preserving algorithm may be configured, may be indicated, or may be negotiated between a receiving end and the transmitting end. This is not limited in embodiments of this application. For example, two parties of data exchange are a base station and a terminal. The base station may determine the data packet compression algorithm and/or the privacy preserving algorithm based on a service requirement, a capability of the base station, a capability of the terminal, a service request of the terminal, and the like. The base station indicates the determined data packet compression algorithm and/or privacy preserving algorithm to the terminal. For example, the base station sends RRC signaling to the terminal, where the RRC signaling indicates the determined data packet compression algorithm and/or privacy preserving algorithm. It should be understood that the RRC signaling is merely used as an example of a message but not a limitation. This is not limited in embodiments of this application. Other signaling that can indicate the data packet compression algorithm and/or the privacy preserving algorithm shall also fall within the protection scope of this application.

Optionally, the data processing layer corresponds to a radio bearer (Radio Bearer, RB), and a related configuration of the data processing layer may be carried when the radio bearer is established. For example, when a data plane bearer is established, information configuration may be as follows:

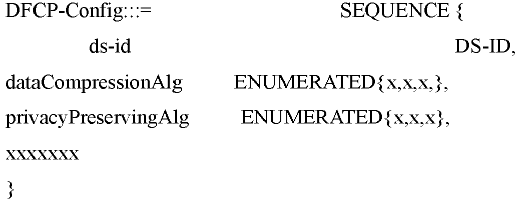

DFCP-Config indicates configuration information of the DFCP layer, ds-id is an identifier of a DS, dataCompressionAlg indicates a data compression algorithm, and privacyPreservingAlg indicates a data privacy preserving algorithm. It may be understood that content of the configuration information is not limited thereto. For example, XXXXXXX indicates other possible information that is omitted. The foregoing is merely an example of the configuration information.

Optionally, in this manner, the terminal may further send a capability message to the base station, where the capability message indicates that the terminal has a data packet compression capability and/or a privacy preserving capability. An example of the capability message is as follows:

```
          ......struUE-UE-NR-Capability
          ........accessStratumRelease:re115(0)
          ........pdcp-Parameters
         supportedDataCompression-Profiles:
                     0000:FALSE
                     ........
                  supportedPrivacy Presvering -Profiles:
                     0000:TRUE
          ..........supportedROHC-Profiles:
                  Profile0x0000:FALSE
```

It should be understood that the foregoing configuration information is merely an example rather than a limitation.

FIG. 9 shows an example of a procedure of transmitting a data flow. The data flow enters a DFCP layer of a transmitting end. The DFCP layer matches a corresponding radio bearer for the data flow based on a DS ID. After compression and privacy preserving are performed on the data flow at the DFCP layer, DFCP data header information is added to the data flow, and the data flow flows out of the DFCP layer. When a receiving end receives the data flow, after the data flow enters the DFCP layer, the receiving end parses the DFCP data header information, and then performs processes such as privacy de-preserving and decompression to obtain the data flow that matches the radio bearer. For a path that the data flow flows out of the DFCP layer passes, refer to FIG. 10. In other words, the data flow enters the PHY layer after passing through the DFCP layer, a PDCP layer, an RLC layer, and a MAC layer, and then is sent to the receiving end. It may be understood that, the receiving end receives the data flow from the PHY layer, and the data flow reaches a DFCP layer after passing through a MAC layer, an RLC layer, and a PDCP layer. It should be understood that, the foregoing example of a data flow direction is based on a premise that protocol stacks of the receiving end and the transmitting end are completely the same. Certainly, there is also a case in which the protocol stacks of the receiving end and the transmitting end are not completely the same. This is not limited in this application.

In this possible implementation, for a function of the PDCP layer, refer to descriptions in FIG. 6. Details are not described herein again.

In still another possible implementation, the PDCP layer may be configured to perform data packet compression and privacy preserving. In other words, in this manner, the data processing layer may not have a function of data packet compression and/or privacy preserving, and the function is completed by the PDCP layer. Specifically, for a manner in which the PDCP layer performs packet compression and/or privacy preserving and related signaling settings, refer to related descriptions of packet compression and/or privacy preserving at the DFCP layer. Details are not described herein again.

In the foregoing manner, the communication protocol stack is simple to deploy and easy to construct, thereby reducing a deployment difficulty of an air interface data transmission protocol stack.

Optionally, the communication protocol stack may further include an SDAP layer. As shown in FIG. 11, the SDAP layer is located between the DFCP layer and the PDCP layer, and the SDAP layer may be configured to complete mapping between a data service task and a radio bearer. In other words, in this manner, the DFCP layer does not have a function of completing mapping between the data service task and the radio bearer. Optionally, the PDCP layer may have a data packet compression function and/or a privacy preserving function. Certainly, the data packet compression function and/or the privacy preserving function may also be completed by the DFCP layer. This is not limited in this application.

The communication protocol stack provided in this manner is highly compatible, can be applied to a plurality of communication systems, and can further reduce costs in specific implementation.

In various possible implementations of the foregoing communication protocol stack, the MAC layer may be configured to perform functions such as mapping between a data plane logical channel and a transport channel, air interface resource scheduling for a data plane logical channel, priority control, or data multiplexing/demultiplexing.

For the RLC layer and the PHY layer, refer to descriptions about the RLC layer and the PHY layer in FIG. 6. Details are not described herein again.

In a possible implementation, the DFCP is deployed above the PDCP layer, and is deployed in a same chip as the PDCP layer. An air interface protocol layer on a terminal side is deployed on a baseband chip. On a base station side (including an O-RAN), the DFCP layer may be deployed on a CU-CP or a CU-UP. This is not limited in this application.

In the foregoing possible implementations of the communication protocol stack, possible message configurations of the DFCP layer are as follows:

An example of a configuration of a control information is shown in Table 1.

**Table 1 DFCP control information**

| 7 | 6 | 5 | 4 | 3 | 2 | 1 | |
|---|---|---|---|---|---|---|---|
| D/C | PDU Type | | | S | Reserved | | |
| SequenceNumber(1st octet) | | | | | | | |
| SequenceNumber(2nd octet) | | | | | | | |
| Data | | | | | | | |
| ... | | | | | | | |

S is a sequence number flag (Sequence number flag). If a value of S is 1, it indicates that a sequence number exists; otherwise, it indicates that a sequence number does not exist. Meanings of S in the following tables are the same. Details are not described below. D/C is for identifying whether the PDU is a control PDU or a data PDU. "PDU Type" is for identifying a type of the PDU. "Reserved" indicates a reserved bit. The first row indicates an index of a bit in a configuration message. For example, bit 7 may indicate D/C, and bit 6, bit 5, and bit 4 may indicate a PDU type. SequenceNumber is a sequence number. "Data" is data. For meanings represented by same content in the following tables, refer to descriptions herein. Details are not described below.

Specifically, the message received by the DFCP layer includes a control information and a data message (also referred to as a service message), and the control information may indicate a function item. The PDU may be further classified into a control PDU (control PDU) and a data PDU (data PDU). For example, as shown in Table 2, a classification of a PDU may be indicated by using a bit value. For example, if the bit value is 0, it indicates that the PDU is a control PDU; and if the bit value is 1, it indicates that the PDU is a data PDU.

**Table 2 PDU classification indication table**

| Bit (Bit) | Classification (Description) |
|---|---|
| 0 | Control PDU |
| 1 | Data PDU |

Specifically, PDUs may be further classified into types shown in Table 3: a function configuration PDU, a forwarding configuration PDU, a data protection technology configuration PDU, a statistics report PDU, and the like. For example, a classification of the data PDU may be indicated by using a bit value. For example, if the bit value is 000, it indicates a function configuration PDU; if the bit value is 001, it indicates a forwarding configuration PDU; if the bit value is 010, it indicates a data protection technology configuration PDU; and if the bit value is 011, it indicates a statistics report PDU.

**Table 3 PDU type indication table**

| Bit (Bit) | Type description (Description) |
|---|---|
| 000 | Function configuration (function config) |
| 001 | Forwarding configuration (forwarding config) |
| 010 | Data protection technology settings (DPT install) |
| 011 | Statistics report (statistic report) |
| 100-111 | Reserved (Reserved) |

An example of a function configuration (function config) message is shown in Table 4.

**Table 4 Function configuration message**

| 7 | 6 | 5 | 4 | 3 | 2 | 1 | 0 |
|---|---|---|---|---|---|---|---|
| D/C | PDU Type (000) | | | S | Reserved | | |
| SequenceNumber(1st octet) | | | | | | | |
| SequenceNumber(2nd octet) | | | | | | | |
| type | | | | | | | |
| DS ID | | | | | | | |
| DS ID(cont.) | | | | | | | |
| DP ID | | | | | | | |
| DP ID(cont.) | | | | | | | |
| counts | | | | | | | |
| function config info 1 | | | | | | | |
| function config info2 | | | | | | | |
| ... | | | | | | | |

"type" indicates a type of a PDU carrying a function configuration message. For example, a value of "type" may represent a type of a PDU carrying a function configuration message. For example, type=0 indicates that a PDU is added, type=1 indicates that a PDU is modified, and type=2 indicates that a PDU is deleted.

The DS ID is a data service (Data Service, DS) identifier, and the DP ID is a data plane (Data Plane, DP) identifier. DS ID(cont.) may be a plurality of data service identifiers, and DP ID(cont.) may be a plurality of data plane identifiers. For meanings of same identifiers in other tables, refer to descriptions herein. Details are not described below.

"counts" indicates a quantity of function configuration items. For example, if a value of "counts" is 2, there are two function configurations. If a value of "counts" is 3, there are three function configurations. Alternatively, "counts" may represent a quantity of function configuration items by using a bit value. For example, a bit value 1 indicates that there is one function configuration item, and a bit value 0 indicates that there are two function configuration items. An indication manner of "counts" is not limited in this application.

The function configuration information 1 (function config info1) and the function configuration information 2 (function config info2) in the table are identifiers of the function configuration information respectively. For example, specific function configuration information may be represented by using a bit value.

In a possible implementation, different function configuration items are represented by using two-level bit coding. Examples are as follows:
0000XXXX represents data acquisition: 00000001 represents a data acquisition interval, 00000010 represents batch data, 00000011 represents streaming data, 00000100 represents an event report, and 00000101 represents Vtap.
0001XXXX represents data pre-processing: 00010001 represents data cleaning, 00010010 represents data filtering, 00010011 represents data convergence, 00010100 represents data deduplication, and 00010101 represents data aggregation.
0010XXXX represents data storage: 00100001 represents centralized storage, 00100010 represents distributed storage, 00100011 represents storage expansion, and 00100100 represents on-chain storage.
0011XXXX represents data security and privacy preserving: 00110001 represents differential privacy, 00110010 represents homomorphic encryption, 00110011 represents multi-party computing, and 00110100 represents zero-knowledge proof.
0100XXXX represents data source tracing: 01000001 represents authentication, 01000010 represents authorization, 01000011 represents access control, and 01000100 represents source tracing/audit.
0101XXXX represents data sharing/transaction: 01010001 represents data sharing, and 01010010 represents data transaction.
0111XXXX represents a data dictionary: 01110001 represents a feature dataset, and 01110010 represents a data format.

In a possible case, after receiving a control information, the DA further needs to forward data (data) corresponding to the control information. The control information may indicate a route of the data. The following provides an example of forwarding configuration (forwarding config), as shown in Table 5:

**Table 5 Forwarding message configuration table**

| 7 | 6 | 5 | 4 | 3 | 2 | 1 | 0 |
|---|---|---|---|---|---|---|---|
| D/C | PDU Type (001) | | | S | Reserved | | |
| SequenceNumber(1st octet) | | | | | | | |
| SequenceNumber(2nd octet) | | | | | | | |
| length | | | | | | | |
| type | | | | | | | |
| DS ID | | | | | | | |
| DS ID(cont.) | | | | | | | |
| DP ID | | | | | | | |
| DP ID(cont.) | | | | | | | |
| route counts | | | | | | | |
| route type | | | | | | | |
| Next DA ID1 | | | | | | | |
| Next DA ID1(cont.) | | | | | | | |
| route type | | | | | | | |
| Next DA Counts | | | | | | | |
| Next DA ID2 | | | | | | | |
| Next DA ID2(cont.) | | | | | | | |
| Next DA ID3 | | | | | | | |
| Next DA ID3(cont.) | | | | | | | |
| ... | | | | | | | |
| ... | | | | | | | |

"type" indicates a type of a forwarding message. For example, a value of "type" may indicate a status of the forwarding message. For example, type=0 indicates that a forwarding message is added, type=1 indicates that a forwarding message is modified, and type=2 indicates that a forwarding message is deleted.

"route counts" in Table 5 represents a route hop count, and optionally, a maximum value may be 255.

"route type" represents a type of a next hop. For example, a value of "route type" may indicate a type of a next hop. For example, when route type=0, it indicates that the next hop has only one node, or the next hop is a single-node type. When route type=1, it indicates that the next hop has a plurality of nodes, or the next hop is a multi-node type, that is, is in a multicast scenario, and data needs to be forwarded to a plurality of nodes. It should be understood that the forwarding message may include a next-hop forwarding message, or may include all subsequent routing information. This is not limited in this application.

Next DA ID1 is an identifier of a next hop (for example, a next data agent). Next DA Counts indicates that other DAs exist, and Next DA ID2 indicates identifiers of the other DAs (for example, one or more DAs other than a DA of ID1). Next DA ID2(cont.) indicates that there are other DAs in addition to a DA of ID2. Similarly, Next DA ID3(cont.) indicates that there are other DAs in addition to a DA of ID3. Next DA ID3 indicates identifiers of the other DAs (for example, one or more DAs other than the DAs of ID1 and ID2).

An example of a data protection technology configuration message is shown in Table 6.

**Table 6 Data protection technology configuration table**

| 7 | 6 | 5 | 4 | 3 | 2 | 1 | 0 |
|---|---|---|---|---|---|---|---|
| D/C | PDU Type | | | S | Reserved | | |
| SequenceNumber(1st octet) | | | | | | | |
| SequenceNumber(2nd octet) | | | | | | | |
| length | | | | | | | |
| DPT Type | | | | | | | |
| Data | | | | | | | |
| ... | | | | | | | |

"length" indicates a length of information, for example, may indicate a length of information starting from DPT Type information. "DPT Type" indicates a data protection technology type. "Data" indicates data.

An example of statistical information reporting configuration information is shown in Table 7.

| 7 | 6 | 5 | 4 | 3 | 2 | 1 | 0 |
|---|---|---|---|---|---|---|---|
| D/C | PDU Type | | | S | Reserved | | |
| SequenceNumber(1st octet) | | | | | | | |
| SequenceNumber(2nd octet) | | | | | | | |
| DS ID | | | | | | | |
| DS ID(cont.) | | | | | | | |
| DP ID | | | | | | | |
| DP ID(cont.) | | | | | | | |
| nPackets | | | | | | | |
| nPackets(cont.) | | | | | | | |
| nBytes(1st octet) | | | | | | | |
| nBytes(2nd octet) | | | | | | | |
| nBytes(3rd octet) | | | | | | | |

nPackets indicates a quantity of messages, nPackets(cont.) indicates a plurality of messages, and nBytes indicates a quantity of bytes. For example, nBytes(1st octet) indicates a quantity of bytes in the 1^{st} message, nBytes(2^{nd} octet) indicates a quantity of bytes in the 2^{nd} message, and nBytes(3^{rd} octet) indicates a quantity of bytes in the 3^{rd} message.

An example of the DFCP service message is as follows:

Example 1 is shown in Table 8:

**Table 8 Service message configuration table**

| 7 | 6 | 5 | 4 | 3 | 2 | 1 | 0 |
|---|---|---|---|---|---|---|---|
| D/C | S | Reserved | | Protocol ID (0/2) | | | |
| DS ID | | | | | | | |
| DS ID(cont.) | | | | | | | |
| DP ID | | | | | | | |
| DP ID(cont.) | | | | | | | |
| SequenceNumber(1st octet) | | | | | | | |
| SequenceNumber(2nd octet) | | | | | | | |
| SequenceNumber(3rd octet) | | | | | | | |
| | | | | data length | | | |
| | | | | length(cont.) | | | |
| | | | | data | | | |
| | | | | ... | | | |

protocol id=0 indicates that a data packet does not include path forwarding information, and the DO delivers a forwarding route to the DA. If a UE does not receive route forwarding information of a corresponding DP, the UE sends data to a base station connected to the DA by default. protocol id=1 indicates that a data packet carries route forwarding information. protocol id=2 indicates that the remainder theorem is used, and a DA ID and a DP ID identify a next-hop address. route type=0 indicates that the next hop has only one node. route type=1 indicates that the next hop has a plurality of nodes, that is, is in a multicast scenario. In other words, routing information of data may alternatively be indicated in a service message.

"length" indicates a length of information, and for example, may indicate a length of information starting from "data", for example, a length of all information starting from the 1^{st} byte of "data", including a length of "data". Alternatively, "length" may be a length of partial information starting from the 1^{st} byte of "data". Alternatively, the length of the information may be a length of information starting from the last byte of "data" or the 1^{st} byte of next piece of information. This is not limited in this application.

It should be understood that this application provides an example of indicating the routing information of the data, to be specific, the routing information may be indicated by using the control information, or may be indicated by using the service information. However, this application is not limited thereto. For example, the DA may determine routing information of the data based on local routing information or in another manner, both of which shall fall within the protection scope of this application.

Example 2 is shown in Table 9:

**Table 9 Service message configuration table**

| 7 | 6 | 5 | 4 | 3 | 2 | 1 | 0 |
|---|---|---|---|---|---|---|---|
| D/C | S | Reserved | | Protocol ID (1) | | | |
| header length | | | | | | | |
| DS ID | | | | | | | |
| DS ID(cont.) | | | | | | | |
| DP ID | | | | | | | |
| DP ID(cont.) | | | | | | | |
| SequenceNumber(1st octet) | | | | | | | |
| SequenceNumber(2nd octet) | | | | | | | |
| SequenceNumber(3rd octet) | | | | | | | |
| route counts | | | | | | | |
| Route type | | | | | | | |
| Next DA ID1 | | | | | | | |
| Next DA ID1(cont.) | | | | | | | |
| Route type | | | | | | | |
| D/C | S | Reserved | | Protocol ID (1) | | | |
| Next DA Counts( | | | | | | | |
| Next DA ID2 | | | | | | | |
| Next DA ID2(cont.) | | | | | | | |
| Next DA ID3 | | | | | | | |
| Next DA ID3(cont.) | | | | | | | |
| ... | | | | | | | |
| data length | | | | | | | |
| data length(cont.) | | | | | | | |
| data | | | | | | | |
| ... | | | | | | | |

protocol id=0 indicates that a data packet does not include path forwarding information, and the DO delivers a forwarding route to the DA. If a UE does not receive route forwarding information of a corresponding DP, the UE sends data to a base station connected to the DA by default. protocol id=1 indicates that a data packet carries route forwarding information. protocol id=2 indicates that the remainder theorem is used, and a DA ID and a DP ID identify a next-hop address. The header length indicates a length of a data header, and the data length indicates a length of information starting from "data". For details, refer to the descriptions in Table 8. Details are not described again. route type=0 indicates that the next hop has only one node. route type=1 indicates that the next hop has a plurality of nodes, that is, is in a multicast scenario.

It should be understood that the foregoing tables are merely used as examples rather than limitations of corresponding messages. A correspondence between the foregoing values and meanings represented by the values is merely used as an example instead of a limitation, and another representation manner shall fall within the protection scope of this application. For example, different letters such as A, B, and C may be for representing different function configuration items. This is not limited in this application.

It should be further understood that names of the fields in the foregoing tables are merely used as examples. This is not limited in this application.

It should be further understood that a deployment manner of the communication protocol stack is merely used as an example instead of a limitation, and another possible design that can implement a function of the communication protocol stack shall fall within the protection scope of this application.

This application proposes a new communication protocol stack and deployment of each protocol layer. The communication protocol stack can be applied to each node on a path of a data flow, so that each node has a data processing capability, thereby improving data processing efficiency. In addition, each node can implement distributed data management, thereby improving a data management capability and significantly improving user experience.

An embodiment of this application further provides a communication method, and the communication method is applicable to the foregoing communication protocol stack. It should be understood that the communication method is applicable to any node, for example, a terminal device or a network device, on a data flow path. It may be understood that both the terminal device and the network device are examples of data processing devices. The following describes the communication method by using a terminal device and a network device as examples.

As shown in FIG. 12, the communication method includes the following steps.

Step 1201: A data source sends first data to a first communication apparatus. Correspondingly, the first communication apparatus receives the first data.

It may be understood that the first data belongs to data plane data. The following describes the solution by using data #A as an example of the first data. For the data source, refer to the foregoing related descriptions of the DO. Details are not described herein again. The first communication apparatus may be a terminal device.

Step 1202: The first communication apparatus processes the first data through a data processing layer, to obtain second data.

The first communication apparatus may perform at least one of the following through the data processing layer: routing and forwarding of data #A, acquisition of data #A, pre-processing of data #A, storage of data #A, source tracing of data #A, sharing or transaction of data #A, analytics of data #A or data format confirmation of data #A, parsing and reassembling of a header (header) of data #A, statistical information reporting, pushing and updating of a data protection technology, mapping between a data service task and a radio bearer, or data packet compression or privacy preserving of data #A.

Specifically, routing and forwarding of data #A may be determined based on a service message. For the service message, refer to the foregoing related descriptions of the DFCP service message. Details are not described herein again. For example, the service message includes routing information of data #A. The first communication apparatus determines a route of data #A based on the service message through the data processing layer, for example, an ID corresponding to a next-hop node. The next hop may be one node, or may be a plurality of nodes. Correspondingly, the first communication apparatus may determine, based on the service message through the data processing layer, one ID, all IDs, or a part of IDs of the nodes corresponding to the next hop. This is not limited in this application.

Specifically, the first communication apparatus may determine, based on function configuration information, which one or more of the foregoing items are to be performed. Optionally, pushing and updating of the data protection technology and data packet compression or privacy preserving of data #A may also be determined based on the function configuration information. For the function configuration information herein, refer to the foregoing descriptions. Details are not described again.

In addition, the statistical information reporting may be determined based on statistical information reporting configuration information. For the statistical information reporting configuration information, refer to the foregoing descriptions. Details are not described again.

Step 1203: The first communication apparatus sends the second data to a PDCP layer through the data processing layer. Correspondingly, the PDCP layer receives the second data.

In other words, the PDCP layer is further deployed in the first communication apparatus. After being processed by the data processing layer, data #A flows from the data processing layer to the PDCP layer.

Optionally, data compression and privacy preserving may also be completed through the PDCP layer. In other words, data compression and privacy preserving are not performed at the data processing layer, and are completed by the PDCP layer. For other processing performed by the PDCP layer on the second data, refer to the foregoing descriptions. Details are not described again. Data obtained through processing by the PDCP layer flows from the PDCP layer to an RLC layer, a MAC layer, and a PHY layer in sequence, and then is sent from the PHY layer.

In another possible implementation, an SDAP layer is further deployed in the first communication apparatus. Data #A is processed by the data processing layer and then flows into the SDAP layer. Optionally, the SDAP layer may complete mapping between a data service task and a radio bearer. In other words, the data processing layer does not need to perform the mapping between the data service task and the radio bearer, and the mapping is completed by the SDAP layer. Data obtained through processing by the SDAP flows into the PDCP layer, and then from the PDCP layer to the RLC layer, the MAC layer, and the PHY layer in sequence, and then is sent from the PHY layer. In this manner, that the data processing layer sends the second data to the PDCP layer may be understood as that the second data flows out of the data processing layer and flows into the PDCP layer, and processing by the SDAP layer is performed in this process.

With reference to the foregoing two possible implementations, the second data may be data that directly flows from the data processing layer to the PDCP layer, or may be data that flows from the data processing layer to the SDAP layer for processing and then flows into the PDCP layer. In other words, in the first communication apparatus, data flowing into the PDCP layer is collectively referred to as the second data. For example, data #A becomes data #B after being processed by the data processing layer, data #B directly flows into the PDCP layer, and data #B is the second data. Data #B becomes data #C after being processed by the SDAP layer, and data #C flows into the PDCP layer, and data #C is also included in a range of the second data.

It should be understood that for functions of the RLC layer, the MAC layer, and the PHY layer and processing of the data, refer to the foregoing descriptions. Details are not described herein again.

Step 1204: The first communication apparatus sends third data to a second communication apparatus. Correspondingly, the second communication apparatus receives the third data.

The third data is obtained by processing the second data through at least the PDCP layer. Herein, processing the second data through at least the PDCP layer may be understood as that the second data may be processed at another protocol layer after being processed at the PDCP layer. For example, data #C is used as an example. Data #C flows into the PDCP layer, and becomes data #D after being processed by the PDCP layer. Then, data #D is processed by the RLC layer, the MAC layer, and the PHY layer once and becomes data #E. Data #E is the third data.

Optionally, the first communication apparatus may determine a next hop of the data, that is, the second communication apparatus, based on a data processing layer service message. The second communication apparatus may be a network device. For the data processing layer service message, refer to the foregoing descriptions. Details are not described again.

Step 1205: The second communication apparatus processes fourth data through the PDCP layer, to obtain fifth data.

In a possible implementation, before processing the fourth data, the second communication apparatus processes the third data through at least a PHY layer, to obtain the fourth data. For example, data #E is the third data. In a possible implementation, after receiving data #E, the second communication apparatus processes the data through at least the PHY layer. For example, the data may be processed through the PHY layer, a MAC layer, and an RLC layer. Specifically, for processing of the data by each layer, refer to the foregoing related descriptions of the layers. Optionally, this may correspond to processing at each layer in step 1203. For example, in step 1203, the data is modulated by the PHY layer, and in step 1204, the data is modulated through the PHY layer. Details are not described herein again. Data #E becomes data #F after being processed. The data #F is an example of the fourth data.

Optionally, an SDAP layer is deployed in the second communication apparatus, and the SDAP layer may process data #F, for example, complete mapping between a data service task and a radio bearer. After passing through the SDAP layer, data #F becomes data #G, and data #G flows into the PDCP layer. Data #G is another example of the fourth data.

Optionally, when there is no SDAP layer in the second communication apparatus, after data #E is processed at the PHY layer, the MAC layer, and the RLC layer in sequence, data #F flows into the PDCP layer. For example, the PHY layer may decrypt the data, the MAC layer may demultiplex the data, and the RLC layer may correct the data. It should be understood that, herein is merely an example of functions of the layers. For details, refer to the foregoing descriptions of functions of the PHY layer, the MAC layer, and the RLC layer.

In a possible case, the PDCP layer may decompress, decrypt, perform integrity check on, and/or sort data #F or data #G, to obtain data #H. Data #H is an example of the fifth data. Specifically, for a function of the PDCP layer, refer to the foregoing descriptions of the function of the PDCP layer. Details are not described herein again.

Step 1206: The second communication apparatus sends the fifth data to a data processing layer through the PDCP layer. Correspondingly, the data processing layer receives the fifth data.

Step 1207: The second communication apparatus processes the fifth data through the data processing layer.

For example, the data processing layer may process data #H, for example, may complete at least one of routing and forwarding of data-plane service data, data acquisition, data pre-processing, data storage, data source tracing, data sharing or transaction, data analytics, data format confirmation, parsing and reassembling of a header of a data packet, statistical information reporting, pushing and updating of a data protection technology, mapping between a data service task and a radio bearer, and the like. Optionally, when the PDCP layer does not undertake functions such as data compression and privacy preserving, the data processing layer may complete a task of data compression and/or privacy preserving.

It should be understood that data processing at the protocol layer may be predefined, preconfigured, or determined based on indication information. For example, the data processing layer determines, based on control information, processing on the data. For details, refer to descriptions in FIG. 8 to FIG. 11. Details are not described herein again.

In the method, data is processed by a node on a data flow path, for example, the first communication apparatus or the second communication apparatus, thereby significantly improving data processing efficiency. It may be understood that the first communication apparatus or the second communication apparatus is merely used as an example of the node on the data flow path. There may be a plurality of nodes on the data flow path. For processing of data by each node, refer to the descriptions in FIG. 12. In a multi-node scenario, each node has a data processing capability, thereby further improving data processing efficiency and improving data service quality. In addition, a plurality of nodes may collaborate with each other to process data. The nodes collaborate with each other, to enhance a distributed data management capability of the communication system, and further improve user experience.

An embodiment of this application further provides a communication procedure. The communication procedure is applicable to the foregoing communication protocol stack or the foregoing communication method. It should be understood that the following uses an example in which a DO and a base station are used as the foregoing first communication apparatus and a UE is used as the foregoing second communication apparatus for description. However, communication bodies in this embodiment of this application are not limited thereto. As shown in FIG. 13, the procedure includes the following steps.

Step 1301: The UE sends capability information to the base station. Correspondingly, the base station receives the capability information.

The capability information indicates that the UE supports data compression and privacy preserving. Specifically, for data compression and privacy preserving, refer to descriptions in related content in FIG. 8 to FIG. 11. Details are not described herein again.

Step 1302: The DO sends a data service request to the base station. Correspondingly, the base station receives the data service request.

Optionally, the data service request may be determined based on a service requirement.

Step 1303: The base station determines a data compression algorithm and/or a privacy preserving algorithm.

Optionally, the base station may determine an appropriate data compression algorithm and/or privacy preserving algorithm based on a service requirement, a base station capability, a terminal capability, a service request, and the like. For example, the base station may determine the data compression algorithm and/or the privacy preserving algorithm in an algorithm repository. For details, refer to the foregoing descriptions about the data protection and the data compression. Details are not described herein again.

Step 1304: The base station sends first indication information to the UE. Correspondingly, the UE receives the first indication information.

The first indication information is for establishing a data plane bearer between the base station and the UE. The first indication information may indicate a DS ID. Optionally, the first indication information may further indicate the data compression algorithm and/or the privacy preserving algorithm determined by the base station in step 1303.

Optionally, the first indication information may be RRC signaling.

Step 1305: The UE sends second indication information to the base station. Correspondingly, the base station receives the second indication information.

The second indication information indicates that the data plane bearer is successfully established.

Step 1306: The base station sends a first control information to the UE. Correspondingly, the UE receives the first control information.

The first control information indicates a data pipeline function configuration. For example, the first control information may be function configuration information, and is for configuring the UE to execute a data processing task. The data processing task may be at least one of data routing and forwarding, data acquisition, data pre-processing, data storage, data source tracing, data sharing or transaction, data analytics, data format confirmation, parsing and reassembling of a header of a data packet, statistical information reporting, pushing and updating of a data protection technology, mapping between a data service task and a radio bearer, and the like. Optionally, when a PDCP layer does not undertake functions such as data compression and privacy preserving, a data processing layer may complete at least one task of data compression and/or privacy preserving. Specifically, for the function configuration information and each function item, refer to descriptions in FIG. 8 to FIG. 12. Details are not described again.

Step 1307: The base station sends a second control information to the UE. Correspondingly, the UE receives the second control information.

The second control information indicates a data pipeline forwarding information configuration. For example, the forwarding information configuration may indicate a next hop of the data, for example, an ID of a next node. Specifically, for the forwarding information configuration, refer to the descriptions of the forwarding message in FIG. 8 to FIG. 11. Details are not described herein again.

Step 1308: The UE processes data based on the first control information.

The UE may process the data based on a function item configured in the first control information. Specifically, the data may be processed by using a protocol layer deployed in the UE. The protocol layer may be a PHY layer, a MAC layer, an RLC layer, a PDCP layer, an SDAP layer, a DFCP layer, or the like. For details, refer to the descriptions in FIG. 12, for example, the descriptions in step 1205 to step 1207. Details are not described herein again.

Step 1309: The base station performs data exchange with the UE.

The data exchange may be that the UE sends data to the base station, or the base station sends data to the UE. In a possible implementation, the base station shares data with the UE.

Step 1310: The UE sends statistical information to the base station. Correspondingly, the base station receives the statistical information.

For the statistical information, refer to the descriptions of the statistical information and the statistical information reporting configuration in FIG. 8 to FIG. 11. Details are not described herein again.

Step 1311: The base station processes the data.

Optionally, after processing the data, the base station may forward the data. A next target node of the data or a plurality of subsequent target nodes may be determined based on a service message. For the service message, refer to descriptions of the DFCP service message in FIG. 8 to FIG. 11. Details are not described herein again.

Optionally, the base station may process the data through a protocol layer deployed in the base station. For example, the protocol layer may be a PHY layer, a MAC layer, an RLC layer, a PDCP layer, an SDAP layer, a DFCP layer, or the like. For details, refer to the descriptions in FIG. 12, for example, the descriptions in step 1201 to step 1206. Details are not described herein again.

Step 1312: The base station sends third indication information to the UE. Correspondingly, the UE receives the third indication information.

The third indication information indicates to delete the data plane bearer.

Step 1313: The UE sends fourth indication information to the base station. Correspondingly, the base station receives the fourth indication information.

The fourth indication information indicates that the data plane bearer is successfully deleted.

This manner provides an example of the communication procedure applicable to the foregoing communication protocol stack and communication method. Both the base station and the UE have a data processing capability, thereby improving data processing efficiency. In addition, determining the data compression algorithm and/or the privacy preserving algorithm and the data processing function based on the data service request can accurately meet a user requirement and improve user experience.

The foregoing provides an example of the communication procedure, and the following provides an example of a procedure in a specific application scenario based on the communication procedure. The application scenario may be map construction. In other words, the communication protocol stack, the communication method, and the communication procedure described above are applicable to the map construction field. Specifically, as shown in FIG. 14, the following steps may be included.

Step 1401: UE #A sends capability information to a base station. Correspondingly, the base station receives the capability information.

The capability information indicates that the UE supports data compression, privacy preserving, and environment map perception data acquisition.

It should be understood that there may be M UEs participating in the environment map perception data acquisition, and M is a positive integer greater than or equal to 1. UE #A belongs to the M UEs. Herein, only one of the UEs is used as an example to describe this procedure. However, this is not limited in this embodiment of this application. For other UEs, refer to a communication manner of the UE in this procedure. Certainly, other UEs may also have different communication manners. This is not limited.

Step 1402: A DO sends a map construction request to the base station. Correspondingly, the base station receives the map construction request.

The map construction request is an example of the data service request in step 1302.

The map construction request may carry information about a target area, and the target area is a target location of map construction. For example, the target area is area A. The information about the target area may be an identifier of area A, or may be a geographical location of the area A. This is not limited in this embodiment of this application. Any manner in which area A can be indicated shall fall within the protection scope of this application, for example, coordinates corresponding to area A in a user-defined coordinate system.

Step 1403: The base station determines a data compression algorithm and a privacy preserving algorithm.

Specifically, for a manner in which the base station determines the data compression algorithm and the privacy preserving algorithm, refer to the descriptions in step 1303.

Optionally, the base station may further select N UEs in area A, and all of the N UEs may participate in the environment map perception data acquisition. The N UEs are some of the M UEs in step 1402. UE #A belongs to the N UEs.

Step 1404: The base station sends RRC signaling to UE #A. Correspondingly, UE #A receives the RRC signaling.

The RRC signaling is an example of the first indication information in step 1304. The RRC signaling indicates to establish a data plane bearer. The RRC signaling may further indicate a DS ID, a privacy preserving algorithm, and a data compression algorithm. Specifically, refer to the descriptions of the first indication information in step 1304.

Step 1405: UE #A sends indication information to the base station. Correspondingly, the base station receives the indication information.

The indication information indicates that the radio bearer is successfully established. The indication information is an example of the second indication information in step 1305.

Step 1406: The base station sends control information #A to UE #A. Correspondingly, UE #A receives control information #A.

Control message #A indicates that a data pipeline function is configured as the environment map perception data acquisition. UE #A may determine, based on control information #A, to execute a perception data acquisition task. In other words, control information #A indicates an environment map perception data acquisition function for UE #A.

Control message #A is an example of the first control information in step 1306. Specifically, refer to the descriptions of step 1306.

Step 1407: The base station sends control information #B to UE #A. Correspondingly, UE #A receives control information #B.

Control information #B indicates that a next hop of data is the base station.

Control information #B is an example of the first control information in step 1307.

Step 1408: UE #A performs environment map perception data acquisition.

The environment map perception data acquisition is one of the foregoing data processing, that is, data acquisition. UE #A may complete a data acquisition task through a protocol layer deployed in UE #A. For example, the protocol layer may be a PHY layer, a MAC layer, an RLC layer, a PDCP layer, an SDAP layer, a DFCP layer, or the like. For details, refer to the descriptions in FIG. 12, for example, the descriptions in step 1201 to step 1206. Details are not described herein again.

Step 1409: UE #A performs data exchange with the base station.

For example, UE #A sends acquired data to the base station.

Step 1410: UE #A sends statistical information to the base station. Correspondingly, the base station receives the statistical information.

Optionally, the statistical information may be statistical information about the acquired data. Specifically, for the statistical information, refer to the descriptions of the statistical information and the statistical information reporting configuration in FIG. 8 to FIG. 11. Details are not described herein again.

Step 1411: The base station synthesizes a map of area A.

It should be understood that the base station may synthesize the map of area A based on data reported by the N UEs. The base station may process the data through a protocol layer deployed in the base station. For example, the protocol layer may be a PHY layer, a MAC layer, an RLC layer, a PDCP layer, an SDAP layer, a DFCP layer, or the like. For details, refer to the descriptions in FIG. 12, for example, the descriptions in step 1201 to step 1206. Details are not described herein again.

Optionally, after synthesizing the map of area A, the base station may further forward data of the map. For example, forwarding may be performed based on a forwarding message. For the forwarding message, refer to descriptions of the forwarding message in FIG. 8 to FIG. 11. Details are not described herein again.

Step 1412: The base station sends a radio bearer deletion message to UE #A. Correspondingly, UE #A receives the radio bearer deletion message.

The radio bearer deletion message is an example of the third indication information in step 1312.

UE #A may complete radio bearer deletion based on the radio bearer deletion message.

Step 1413: UE #A sends a deletion success acknowledgment indication to the base station. Correspondingly, the base station receives the deletion success acknowledgment indication.

The deletion success acknowledgment indication indicates that the radio bearer is successfully deleted. The deletion success acknowledgment indication is an example of the fourth indication information in step 1313.

In this embodiment, the foregoing communication protocol stack and communication method are applied to a map construction scenario, and the base station cooperates with a plurality of UEs to implement distributed processing on perception data, thereby improving map construction efficiency. In a map application scenario, user experience can be effectively improved.

It should be understood that the map construction is merely used as an example of an application scenario of the communication protocol stack and the communication method in this embodiment of this application. This is not limited in this application.

It should be further understood that a sequence of the steps in embodiments of this application is determined based on internal logic of the method. The foregoing sequence numbers are merely examples, and do not limit a sequence of the steps in this application.

It should be further understood that the methods provided in embodiments of this application may be used separately, or may be used in combination. This is not limited in this application. Various implementations provided in embodiments of this application may be used separately, or may be used in combination. This is not limited in this application. Various examples provided in embodiments of this application may be used separately, or may be used in combination. This is not limited in this application.

It should be further understood that naming of the protocol layer in this application is merely used as an example. In future technical development, each protocol layer may have another name. All names shall fall within the protection scope of this application provided that functions of protocol layers in this application can be implemented.

It should be noted that the execution body in the foregoing embodiments is merely an example, and the execution body may be a chip, a chip system, or a processor that supports the execution body in implementing the method. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by the base station may alternatively be implemented by a component (for example, a chip or a circuit) in the base station, and methods and operations implemented by the UE may alternatively be implemented by a component (for example, a chip or a circuit) in the UE. Methods and operations implemented by a data orchestration apparatus may alternatively be implemented by a component (for example, a chip or a circuit) in the data orchestration apparatus.

The solutions provided in embodiments of this application are mainly described above from a perspective of interaction between apparatuses. It may be understood that, to implement the foregoing functions, each apparatus such as a transmitting end device or a receiving end device includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitting end device or a receiving end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It needs to be noted that, in embodiments of this application, the division into the modules is an example, and is merely logical function division. In actual implementation, another division manner may be used. Descriptions are provided below by using an example in which each functional module is obtained through division based on each corresponding function.

FIG. 15 is a block diagram of a communication apparatus according to an embodiment of this application. As shown in FIG. 15, the communication apparatus 1500 includes a transceiver unit 1510 and a processing unit 1520. The transceiver unit 1510 may communicate with the outside, and the processing unit 1520 is configured to perform data processing. The transceiver unit 1510 may also be referred to as a communication interface or a communication unit. The processing unit 1520 may implement one or more of a physical function, a packet data convergence protocol function, a data processing function, a radio link control function, and a media access control function. The foregoing functions may also be described as functional units or functional modules. Specifically, whether one processing unit 1520 or a plurality of processing units 1520 implement the foregoing functions is not limited in this application.

Optionally, the transceiver unit 1510 may include a sending unit and a receiving unit. The sending unit is configured to perform a sending operation in the foregoing method embodiments. The receiving unit is configured to perform a receiving operation in the foregoing method embodiments.

It needs to be noted that the communication apparatus 1500 may include the sending unit, but does not include the receiving unit. Alternatively, the communication apparatus 1500 may include the receiving unit, but does not include the sending unit. This may be specifically determined depending on whether the foregoing solution performed by the communication apparatus 1500 includes a sending action and a receiving action.

Optionally, the communication apparatus 1500 may further include a storage unit. The storage unit may be configured to store instructions and/or data. The processing unit 1520 may read the instructions and/or the data in the storage unit.

In a design, the communication apparatus 1500 may be configured to perform an action performed by the data processing device in the foregoing method embodiments. The data processing apparatus may be a functional network element in a network, may be a chip or a circuit in a terminal device, a network device, a core network device, or an operation, administration and maintenance device, or may be a logical module or software that can implement all or some functions of the terminal device, the network device, the core network device, or the operation, administration and maintenance device. This is not limited in this application.

Optionally, the communication apparatus 1500 may be a terminal device. The transceiver unit 1510 is configured to perform a receiving or sending operation of the terminal device (for example, the UE) in the foregoing method embodiments, and the processing unit 1520 is configured to perform an internal processing operation of the terminal device (for example, the UE) in the foregoing method embodiments.

Optionally, the communication apparatus 1500 may be a device including the data processing apparatus. Alternatively, the communication apparatus 1500 may be a component disposed in the data processing apparatus, for example, a chip in the data processing apparatus. In this case, the transceiver unit 1510 may be an interface circuit, a pin, or the like. Specifically, the interface circuit may include an input circuit and an output circuit, and the processing unit 1520 may include a processing circuit.

### In a possible implementation:

The transceiver unit 1510 is configured to obtain first data, where the first data belongs to data plane data.

The processing unit 1520 is configured to process the first data, for example, complete routing and forwarding of the data plane data, processing of the data plane data, parsing and reassembling of data packet headers, statistical information reporting, pushing and updating of a data protection technology, and mapping between a data service task and a radio bearer.

The transceiver unit 1510 is further configured to send processed data.

Specifically, the communication apparatus 1500 is configured to implement an operation performed by the UE in the foregoing method embodiments. For example, the processing unit 1520 is configured to implement an operation (for example, the operation in step 1308) performed inside the UE in the foregoing method embodiments, and the transceiver unit 1510 is configured to implement a receiving or sending operation (for example, the operations in step 1301, step 1304, step 1305, step 1306, step 1307, step 1309, step 1310, step 1312, and step 1313) performed by the UE in the foregoing method embodiments; or the processing unit 1520 is configured to implement an operation (for example, the operation in step 1408) performed inside the UE in the foregoing method embodiments, and the transceiver unit 1510 is configured to implement a receiving or sending operation (for example, the operations in step 1401, step 1404, step 1405, step 1406, step 1407, step 1409, step 1410, step 1412, and step 1413) performed by UE #A in the foregoing method embodiments.

Optionally, the communication apparatus 1500 may be a network device. The transceiver unit 1510 is configured to perform a receiving or sending operation of the network device (for example, the base station) in the foregoing method embodiments, and the processing unit 1520 is configured to perform an internal processing operation of the network device (for example, the base station) in the foregoing method embodiments.

Optionally, the communication apparatus 1500 may be a device including the data processing apparatus. Alternatively, the communication apparatus 1500 may be a component disposed in the data processing apparatus, for example, a chip in the data processing apparatus. In this case, the transceiver unit 1510 may be an interface circuit, a pin, or the like. Specifically, the interface circuit may include an input circuit and an output circuit, and the processing unit 1520 may include a processing circuit.

### In a possible implementation:

The transceiver unit 1510 is configured to obtain a data service request.

The processing unit 1520 is configured to determine a function configuration. For example, the processing unit 1520 is configured to determine a data compression algorithm and/or a privacy preserving technology based on the data service request.

The transceiver unit 1510 is further configured to receive processed data.

Specifically, the communication apparatus 1500 is configured to implement an operation performed by the base station in the foregoing method embodiments. For example, the processing unit 1520 is configured to implement an operation (for example, the operation in step 1303) performed inside the base station in the foregoing method embodiments, and the transceiver unit 1510 is configured to implement a receiving or sending operation (for example, the operations in step 1301, step 1304, step 1305, step 1306, step 1307, step 1309, step 1310, step 1312, and step 1313) performed by the base station in the foregoing method embodiments; or the processing unit 1520 is configured to implement an operation (for example, the operation in step 1403) performed inside the base station in the foregoing method embodiments, and the transceiver unit 1510 is configured to implement a receiving or sending operation (for example, the operations in step 1401, step 1404, step 1405, step 1406, step 1407, step 1409, step 1410, step 1412, and step 1413) performed by the base station in the foregoing method embodiments.

As shown in FIG. 16, an embodiment of this application further provides a communication apparatus 1600. The communication apparatus 1600 includes a processor 1610. The processor 1610 is coupled to a memory 1620. The memory 1620 is configured to store a computer program or instructions and/or data. The processor 1610 is configured to execute the computer program or the instructions and/or the data stored in the memory 1620, so that the methods in the foregoing method embodiments are performed.

Optionally, the communication apparatus 1600 includes one or more processors 1610.

Optionally, as shown in FIG. 16, the communication apparatus 1600 may further include the memory 1620.

Optionally, the communication apparatus 1600 may include one or more memories 1620.

Optionally, the memory 1620 may be integrated with the processor 1610, or the memory 1620 and the processor 1610 are separately disposed.

Optionally, as shown in FIG. 16, the communication apparatus 1600 may further include a transceiver 1630 and/or a communication interface. The transceiver 1630 and/or the communication interface are/is configured to receive and/or send a signal. For example, the processor 1610 is configured to control the transceiver 1630 and/or the communication interface to receive and/or send a signal.

Optionally, a component for implementing a receiving function in the transceiver 1630 may be considered as a receiver, and a component for implementing a sending function in the transceiver 1630 may be considered as a transmitter. In other words, the transceiver 1630 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter sometimes may also be referred to as a transmitter machine, a transmitting module, a transmitter circuit, or the like.

In a possible implementation, the communication apparatus 1600 is configured to implement an operation performed by the terminal device (the UE) in the foregoing method embodiments. For example, the processor 1610 is configured to implement an operation (for example, the operation in step 1308) performed inside the terminal device in the foregoing method embodiments, and the transceiver 1630 is configured to implement a receiving or sending operation (for example, the operations in step 1301, step 1304, step 1305, step 1306, step 1307, step 1309, step 1310, step 1312, and step 1313) performed by the terminal device in the foregoing method embodiments; or the processor 1610 is configured to implement an operation (for example, the operation in step 1408) performed inside the UE in the foregoing method embodiments, and the transceiver 1630 is configured to implement a receiving or sending operation (for example, the operations in step 1401, step 1404, step 1405, step 1406, step 1407, step 1409, step 1410, step 1412, and step 1413) performed by UE #A in the foregoing method embodiments.

In another possible implementation, the communication apparatus 1600 is configured to implement an operation performed by the network device (for example, the base station) in the foregoing method embodiments. For example, the processor 1610 is configured to implement an operation (for example, the operation in step 1303) performed by the network device (for example, the base station) in the foregoing method embodiments, and the transceiver 1630 is configured to implement a receiving or sending operation (for example, the operations in step 1301, step 1304, step 1305, step 1306, step 1307, step 1309, step 1310, step 1312, and step 1313) performed by the network device (for example, the base station) in the foregoing method embodiments; or the processor 1610 is configured to implement an operation (for example, the operation in step 1403) performed inside the base station in the foregoing method embodiments, and the transceiver 1630 is configured to implement a receiving or sending operation (for example, the operations in step 1401, step 1404, step 1405, step 1406, step 1407, step 1409, step 1410, step 1412, and step 1413) performed by the base station in the foregoing method embodiments.

As shown in FIG. 17, an embodiment of this application further provides a communication apparatus 1700. The communication apparatus 1700 includes a logic circuit 1710 and an input/output interface (input/output interface) 1720.

The logic circuit 1710 may be a processing circuit in the communication apparatus 1700. The logic circuit 1710 may be coupled to a storage unit, and invoke instructions in the storage unit, so that the communication apparatus 1700 can implement the methods and functions in embodiments of this application. The input/output interface 1720 may be an input/output circuit in the communication apparatus 1700, and outputs information processed by the communication apparatus 1700, or inputs to-be-processed data or signaling information into a communication apparatus 1700 for processing.

In a solution, the communication apparatus 1700 is configured to implement an operation performed by the terminal device (for example, the UE) in the foregoing method embodiments.

For example, the logic circuit 1710 is configured to implement a processing-related operation performed by the terminal device (for example, the UE) in the foregoing method embodiments, for example, an operation in step 1308. The input/output interface 1720 is configured to implement a sending and/or receiving-related operation performed by the terminal device (for example, the UE) in the foregoing method embodiments, for example, sending and receiving operations of the terminal device (for example, the UE) in the operations in step 1301, step 1304, step 1305, step 1306, step 1307, step 1309, step 1310, step 1312, and step 1313. Alternatively, the logic circuit 1710 is configured to implement a processing-related operation performed by the terminal device (for example, the UE) in the foregoing method embodiments, for example, an operation in step 1408. The input/output interface 1720 is configured to implement a sending and/or receiving-related operation performed by the terminal device (for example, the UE) in the foregoing method embodiments, for example, sending and receiving operations of the terminal device (for example, the UE) in the operations in step 1401, step 1404, step 1405, step 1406, step 1407, step 1409, step 1410, step 1412, and step 1413. For specific operations performed by the logic circuit 1710, refer to the foregoing descriptions of the processing unit 1520. For operations performed by the input/output interface 1720, refer to the foregoing descriptions of the transceiver unit 1510. Details are not described herein again.

In another solution, the communication apparatus 1700 is configured to implement an operation performed by the network device (for example, the base station) in the foregoing method embodiments.

For example, the logic circuit 1710 is configured to implement a processing-related operation performed by the network device (for example, the base station) in the foregoing method embodiments, for example, an operation in step 1303. The input/output interface 1720 is configured to implement a sending and/or receiving-related operation performed by the network device (for example, the base station) in the foregoing method embodiments, for example, sending and receiving operations of the network device (for example, the base station) in step 1301, step 1304, step 1305, step 1306, step 1307, step 1309, step 1310, step 1312, and step 1313. Alternatively, the logic circuit 1710 is configured to implement a processing-related operation performed by the network device (for example, the base station) in the foregoing method embodiments, for example, an operation in step 1403. The input/output interface 1720 is configured to implement a sending and/or receiving-related operation performed by the network device (for example, the base station) in the foregoing method embodiments, for example, sending and receiving operations of the network device (for example, the base station) in the operations in step 1401, step 1404, step 1405, step 1406, step 1407, step 1409, step 1410, step 1412, and step 1413. For specific operations performed by the logic circuit 1710, refer to the foregoing descriptions of the processing unit 1520. For operations performed by the input/output interface 1720, refer to the foregoing descriptions of the transceiver unit 1510. Details are not described herein again.

As shown in FIG. 18, an embodiment of this application further provides a communication apparatus 1800.

The apparatus 1800 is configured to implement a function of a network element (or referred to as a node) in this application. For example, the network element may be a base station, a terminal, a DU, a CU, a CU-CP, a CU-UP, or an RU. The apparatus 1800 may be the network element, an apparatus that can be installed in the network element, or an apparatus that can be matched and used with the network element. This is not limited. For example, the apparatus may be a chip or a chip system. The apparatus 1800 includes an interface 1801 and a processor 1802. Optionally, the processor 1802 is configured to execute a program 1804. The processor 1802 may store a program 1804, or obtain the program 1804 from another component or another device (for example, from a memory 1803 or downloaded from a third-party website). Optionally, the apparatus 1800 includes the memory 1803. The memory 1803 is configured to store a program 1805. The program 1805 may be pre-stored, or may be subsequently loaded. Optionally, the memory 1803 may be further configured to store necessary data. These components operate together to provide various functions described in this application.

The processor 1802 may include one or more processors, to serve as a combination of computing devices. The processor 1802 may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit or another proper hardware or firmware, and/or a combination of hardware and software configured to perform various functions described in this application. The processor 1802 may be a general-purpose processor or a dedicated processor. For example, the processor 1802 may be a baseband processor or a central processing unit. The baseband processor may be configured to process a communication protocol and communication data. The central processing unit may be configured to execute a software program and process data in the software program. The processor 1802 may be configured to implement a processing-related operation performed by the terminal device (for example, the UE) in the foregoing method embodiments, for example, an operation in step 1308 or step 1408, or may be configured to implement a processing-related operation performed by the network device (for example, the base station) in the foregoing method embodiments, for example, an operation in step 1303 or step 1403.

The interface 1801 may include any suitable hardware or software configured to enable communication with one or more computer devices (for example, a network element in this application). For example, in some embodiments, the interface 1801 may include terminals and/or pins for coupling wires for a wired connection or for coupling wireless transceivers for a wireless connection. In some embodiments, the interface 1801 may include a transmitter, a receiver, a transceiver, and/or an antenna. The interface may be configured to enable communication between computer devices (for example, network elements in this application) by using any available protocol (for example, a 3GPP standard protocol). For example, the interface 1801 may be configured to implement a sending and/or receiving-related operation performed by the network device (for example, the base station) or the terminal device (for example, the UE) in the foregoing method embodiments, for example, sending and receiving operations in the operations in step 1401, step 1404, step 1405, step 1406, step 1407, step 1409, step 1410, step 1412, and step 1413; or is configured to implement a sending and/or receiving-related operation performed by the network device (for example, the base station) or the terminal device (for example, the UE) in the foregoing method embodiments, for example, receiving and sending operations in step 1301, step 1304, step 1305, step 1306, step 1307, step 1309, step 1310, step 1312, and step 1313.

The program in this application refers to software in a broad sense. The software may be program code, a program, a subprogram, an instruction set, code, a code segment, a software module, an application program, a software application program, or the like. The program may run in a processor and/or a computer, to perform various functions and/or processes described in this application.

The memory 1803 may store necessary data required when the processor 1802 executes software. For example, the memory 1803 may be configured to implement a data storage function in FIG. 8.

The memory 1803 may be implemented by using any suitable storage technology. For example, the memory 1803 may be any available storage medium that can be accessed by a processor and/or a computer. A nonlimiting example of the storage medium is: a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic storage medium, a magnetic storage device, a flash memory, a register, a state memory, a remote installation memory, a local or remote memory component, or any other medium that can carry or store software, data, or information and can be accessed by a processor/computer.

The memory 1803 and the processor 1802 may be disposed separately, or may be integrated together. The processor 1802 may read information from the memory 1803, and store and/or write information into the memory. The memory 1803 may be integrated into the processor 1802. The processor 1802 and the memory 1803 may be disposed in an integrated circuit (for example, an application-specific integrated circuit (application-specific integrated circuit, ASIC)). The integrated circuit may be disposed in a network element or another network node in this application.

In this application, sending information to a terminal device may be understood as that a destination of the information is the terminal device. For example, that module A sends information to a terminal includes: Module A sends the information to the terminal through an air interface. Optionally, module A may perform a baseband and/or intermediate radio frequency operation on the information; or module A delivers the information to module B, and module B sends the information to the terminal. When sending the information to the terminal, module B may transparently transmit the information, segment the information and then send the information, or multiplex the information and other information and then send the information. Optionally, module B may perform a baseband and/or intermediate radio frequency operation on the information, and then send the information. Optionally, module B may encapsulate the information in a data packet. Optionally, module B may further add a header, a padding bit, and/or the like to the data packet.

In this application, receiving information from a terminal device may be understood as that a source of the information is the terminal device. For example, that module A receives information from a terminal device includes: Module A receives the information from the terminal through an air interface. Optionally, module A may perform a baseband and/or intermediate radio frequency operation on the information; or module B receives the information from the terminal through an air interface, and delivers the information to module A. That module B delivers the information to module A includes: transparently delivering the received information to module A, combining a plurality of received segments into the information and then delivering the information to module A, or extracting the information from multiplexing information and then delivering the information to module A. Optionally, module B may perform a baseband and/or intermediate radio frequency operation on the received information, and then send the information. Optionally, the information received by module B is encapsulated in a data packet. Optionally, the data packet includes a header, a padding bit, and/or the like.

Module B may be one module, or may be a plurality of modules coupled in sequence. This is not limited. For example, module A is a DU module, and module B is an RU module. For another example, module A is a CU-CP module, and module B is a DU module and an RU module. For example, the foregoing information may be data #C in step 1204, may be the capability information in step 1301, may be the map construction request in step 1402, or the like. Details are not enumerated herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer-readable medium. The computer-readable medium stores program code. When the program code is run on a computer, the computer is enabled to perform the method shown in the method embodiments. For example, when a computer program is executed by a computer, the computer is enabled to implement the method performed by the network device or the method performed by the terminal device in the foregoing method embodiments.

An embodiment of this application further provides a computer program product including instructions. When the instructions are executed by a computer, the computer is enabled to implement the method performed by the network device or the method performed by the terminal device in the foregoing method embodiments.

An embodiment of this application further provides a communication system, including a data orchestration apparatus and a data processing apparatus, or includes a network device and a terminal device.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable media accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The data orchestration apparatus DO and the data processing apparatus in the foregoing apparatus embodiments correspond to the data orchestration apparatus and the data processing apparatus in the method embodiments, and a corresponding module or unit performs a corresponding step. For example, a communication unit (a transceiver) performs a receiving or sending step in the method embodiments, and a processing unit (a processor) may perform another step other than sending and receiving. For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with units and algorithm steps of the examples described in embodiments disclosed in this specification, this application may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, applied to a first communication apparatus, wherein a packet data convergence protocol, PDCP, layer and a data processing layer are deployed in the first communication apparatus, and the method comprises:
receiving (Step 1201) first data, wherein the first data belongs to data plane data;
processing (Step 1202) the first data through the data processing layer, to obtain second data;
sending the second data to the PDCP layer through the data processing layer; and
sending (Step 1203) third data, wherein the third data is obtained by processing the second data through at least the PDCP layer; wherein the processing the first data through the data processing layer comprises:
performing at least one of the following through the data processing layer: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, pushing and updating of a data protection technology, mapping between a data service task and a radio bearer, or data packet compression or privacy preserving of the first data; or
performing at least one of the following through the data processing layer: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, pushing and updating of a data protection technology, or mapping between a data service task and a radio bearer, and at least compression or privacy preserving is performed on the second data through the PDCP layer; or
performing at least one of the following through the data processing layer: routing and forwarding of the first data, acquisition of the first data, pre-processing of the first data, storage of the first data, source tracing of the first data, sharing or transaction of the first data, analytics of the first data or data format confirmation of the first data, parsing and reassembling of a header of the first data, statistical information reporting, or pushing and updating of a data protection technology; and
**characterized in that**
a service data adaptation protocol, SDAP, layer is further deployed in the first communication apparatus, the SDAP layer is located below the data processing layer and above the PDCP layer, and the method further comprises:
performing mapping between a data service task and a radio bearer through the SDAP layer; and
sending, through the SDAP layer, the second data obtained through processing through the SDAP layer to the PDCP layer.

2. The method according to claim 1, wherein the method further comprises:
performing at least compression or privacy preserving on the second data through the PDCP layer.

3. The method according to claim 1, wherein a radio link control, RLC, layer, a media access control, MAC, layer, and a physical layer are further deployed in the first communication apparatus, and that the third data is obtained by processing the second data through at least the PDCP layer comprises:
the third data is obtained by processing the second data through the PDCP layer, the RLC layer, the MAC layer, and the physical layer, or the third data is obtained by processing the second data through the SDAP layer, the PDCP layer, the RLC layer, the MAC layer, and the physical layer.

4. A communication method, applied to a second communication apparatus, wherein a packet data convergence protocol, PDCP, layer, a data processing layer, and a physical, PHY, layer are deployed in the second communication apparatus, and the method comprises:
receiving (Step 1204) third data, and processing the third data through at least the PHY layer to obtain fourth data;
processing (Step 1205) the fourth data through the PDCP layer, to obtain fifth data;
sending (Step 1206) the fifth data to the data processing layer through the PDCP layer; and
processing (Step 1207) the fifth data through the data processing layer;
wherein the processing the fifth data through the data processing layer comprises:
performing at least one of the following through the data processing layer: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, mapping between a data service task and a radio bearer, or at least compression or privacy preserving on the fifth data; or
performing at least one of the following through the data processing layer: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, or pushing and updating of a data protection technology; and
**characterized in that**
a service data adaptation protocol, SDAP, layer is further deployed in the second communication apparatus, the SDAP layer is located below the data processing layer and above the PDCP layer, and the method further comprises:
performing mapping between a data service task and a radio bearer through the SDAP layer.

5. The method according to claim 4, wherein the processing the fourth data through the PDCP layer comprises:
performing at least compression or privacy preserving on the fourth data through the PDCP layer; and
the processing the fifth data through the data processing layer comprises:
performing at least one of the following through the data processing layer: routing and forwarding of the fifth data, acquisition of the fifth data, pre-processing of the fifth data, storage of the fifth data, source tracing of the fifth data, sharing or transaction of the fifth data, analytics of the fifth data or data format confirmation of the fifth data, parsing and reassembling of a header of the fifth data, statistical information reporting, pushing and updating of a data protection technology, or mapping between a data service task and a radio bearer.

6. The method according to any one of claims 4 to 5, wherein a radio link control, RLC, layer and a media access control, MAC, layer are further deployed in the second communication apparatus, and the processing the third data through at least the PHY layer to obtain fourth data comprises:
processing the third data through the PHY layer, the MAC layer, and the RLC layer, to obtain the fourth data.

7. A communication apparatus (1500, 1600, 1800), wherein the apparatus (1500, 1600, 1800) comprises a processor (1520, 1610, 1802), the processor (1520, 1610, 1802) is coupled to a memory (1620, 1803), and the memory (1620, 1803) stores instructions; and when the instructions are run by the processor (1520, 1610, 1802), the processor (1520, 1610, 1802) is enabled to perform the method according to any one of claims 1 to 6.

8. A computer-readable storage medium, wherein the computer-readable storage medium is configured to store a computer program; and when the computer program is run on a computer, the computer is enabled to perform the method according to any one of claims 1 to 6.

9. A computer program product, wherein the computer program product comprises computer program code; and when the computer program code is run, the method according to any one of claims 1 to 6 is implemented.

## Patentansprüche

1. Kommunikationsverfahren, das auf eine erste Kommunikationsvorrichtung angewendet wird, wobei eine Paketdatenkonvergenzprotokollschicht, PDCP-Schicht, und eine Datenverarbeitungsschicht in der ersten Kommunikationsvorrichtung eingesetzt sind, und das Verfahren Folgendes umfasst:
Empfangen (Schritt 1201) erster Daten, wobei die ersten Daten zu den Daten der Datenebene gehören;
Verarbeiten (Schritt 1202) der ersten Daten über die Datenverarbeitungsschicht, um zweite Daten zu erlangen;
Senden der zweiten Daten über die Datenverarbeitungsschicht an die PDCP-Schicht; und
Senden (Schritt 1203) dritter Daten, wobei die dritten Daten durch Verarbeiten der zweiten Daten über mindestens die PDCP-Schicht erlangt werden; wobei das Verarbeiten der ersten Daten über die Datenverarbeitungsschicht Folgendes umfasst:
Durchführen von mindestens einem der folgenden Schritte über die Datenverarbeitungsschicht: Routing und Weiterleitung der ersten Daten, Erfassung der ersten Daten, Vorverarbeitung der ersten Daten, Speicherung der ersten Daten, Quellenverfolgung der ersten Daten, gemeinsame Nutzung oder Transaktion der ersten Daten, Analyse der ersten Daten oder Datenformatbestätigung der ersten Daten, Parsen und Wiederzusammensetzen eines Headers der ersten Daten, statistische Informationsberichterstattung, Vorantreiben und Aktualisieren einer Datenschutztechnologie, Mapping zwischen einer Datendienstaufgabe und einem Funkträger oder Datenpaketkomprimierung oder Wahrung der Privatsphäre der ersten Daten; oder
Durchführen von mindestens einem der folgenden Schritte über die Datenverarbeitungsschicht: Routing und Weiterleitung der ersten Daten, Erfassung der ersten Daten, Vorverarbeitung der ersten Daten, Speicherung der ersten Daten, Quellenverfolgung der ersten Daten, gemeinsame Nutzung oder Transaktion der ersten Daten, Analyse der ersten Daten oder Datenformatbestätigung der ersten Daten, Parsen und Wiederzusammensetzen eines Headers der ersten Daten, statistische Informationsberichterstattung, Vorantreiben und Aktualisieren einer Datenschutztechnologie, oder Mapping zwischen einer Datendienstaufgabe und einem Funkträger und mindestens Komprimierung oder Wahrung der Privatsphäre über die PDCP-Schicht an den zweiten Daten durchgeführt wird; oder
Durchführen von mindestens einem der folgenden Schritte über die Datenverarbeitungsschicht: Routing und Weiterleitung der ersten Daten, Erfassung der ersten Daten, Vorverarbeitung der ersten Daten, Speicherung der ersten Daten, Quellenverfolgung der ersten Daten, gemeinsame Nutzung oder Transaktion der ersten Daten, Analyse der ersten Daten oder Datenformatbestätigung der ersten Daten, Parsen und Wiederzusammensetzen eines Headers der ersten Daten, statistische Informationsberichterstattung oder Vorantreiben und Aktualisieren einer Datenschutztechnologie; und
**dadurch gekennzeichnet, dass**
eine Protokollschicht zur Anpassung von Dienstdaten, SDAP-Schicht, ferner in der ersten Kommunikationsvorrichtung eingesetzt ist, sich die SDAP-Schicht unter der Datenverarbeitungsschicht und über der PDCP-Schicht befindet, und das Verfahren ferner Folgendes umfasst:
Durchführen von Mapping zwischen einer Datendienstaufgabe und einem Funkträger über die SDAP-Schicht; und
Senden der zweiten Daten, die durch die Verarbeitung über die SDAP-Schicht erlangt werden, über die SDAP-Schicht an die PDCP-Schicht.

2. Verfahren nach Anspruch 1, wobei das Verfahren ferner Folgendes umfasst:
Durchführen von mindestens Komprimierung oder Wahrung der Privatsphäre an den zweiten Daten über die PDCP-Schicht.

3. Verfahren nach Anspruch 1, wobei eine Funkverbindungssteuerungsschicht, RLC-Schicht, eine Medienzugriffssteuerungsschicht, MAC-Schicht, und eine physikalische Schicht ferner in der ersten Kommunikationsvorrichtung eingesetzt sind, und der Umstand, dass die dritten Daten durch Verarbeiten der zweiten Daten über mindestens die PDCP-Schicht erlangt werden, Folgendes umfasst:
die dritten Daten werden durch Verarbeiten der zweiten Daten über die PDCP-Schicht, die RLC-Schicht, die MAC-Schicht und die physikalische Schicht erlangt, oder die dritten Daten werden durch Verarbeiten der zweiten Daten über die SDAP-Schicht, die PDCP-Schicht, die RLC-Schicht, die MAC-Schicht und die physikalische Schicht erlangt.

4. Kommunikationsverfahren, das auf eine zweite Kommunikationsvorrichtung angewendet wird, wobei eine Paketdatenkonvergenzprotokollschicht, PDCP-Schicht, eine Datenverarbeitungsschicht und eine physikalische Schicht, PHY-Schicht, in der zweiten Kommunikationsvorrichtung eingesetzt sind, und das Verfahren Folgendes umfasst:
Empfangen (Schritt 1204) dritter Daten und Verarbeiten der dritten Daten über mindestens die PHY-Schicht, um vierte Daten zu erlangen;
Verarbeiten (Schritt 1205) der vierten Daten über die PDCP-Schicht, um fünfte Daten zu erlangen;
Senden (Schritt 1206) der fünften Daten über die PDCP-Schicht an die Datenverarbeitungsschicht; und
Verarbeiten (Schritt 1207) der fünften Daten über die Datenverarbeitungsschicht;
wobei das Verarbeiten der fünften Daten über die Datenverarbeitungsschicht Folgendes umfasst:
Durchführen von mindestens einem der folgenden Schritte über die Datenverarbeitungsschicht: Routing und Weiterleitung der fünften Daten, Erfassung der fünften Daten, Vorverarbeitung der fünften Daten, Speicherung der fünften Daten, Quellenverfolgung der fünften Daten, gemeinsame Nutzung oder Transaktion der fünften Daten, Analyse der fünften Daten oder Datenformatbestätigung der fünften Daten, Parsen und Wiederzusammensetzen eines Headers der fünften Daten, statistische Informationsberichterstattung, Vorantreiben und Aktualisieren einer Datenschutztechnologie, Mapping zwischen einer Datendienstaufgabe und einem Funkträger oder mindestens Komprimierung oder Wahrung der Privatsphäre an den fünften Daten; oder
Durchführen von mindestens einem der folgenden Schritte über die Datenverarbeitungsschicht: Routing und Weiterleitung der fünften Daten, Erfassung der fünften Daten, Vorverarbeitung der fünften Daten, Speicherung der fünften Daten, Quellenverfolgung der fünften Daten, gemeinsame Nutzung oder Transaktion der fünften Daten, Analyse der fünften Daten oder Datenformatbestätigung der fünften Daten, Parsen und Wiederzusammensetzen eines Headers der fünften Daten, statistische Informationsberichterstattung oder Vorantreiben und Aktualisieren einer Datenschutztechnologie; und
**dadurch gekennzeichnet, dass**
eine Protokollschicht zur Anpassung von Dienstdaten, SDAP-Schicht, ferner in der zweiten Kommunikationsvorrichtung eingesetzt ist, sich die SDAP-Schicht unter der Datenverarbeitungsschicht und über der PDCP-Schicht befindet, und das Verfahren ferner Folgendes umfasst:
Durchführen von Mapping zwischen einer Datendienstaufgabe und einem Funkträger über die SDAP-Schicht.

5. Verfahren nach Anspruch 4, wobei das Verarbeiten der vierten Daten über die PDCP-Schicht ferner Folgendes umfasst:
Durchführen von mindestens Komprimierung oder Wahrung der Privatsphäre an den vierten Daten über die PDCP-Schicht; und
das Verarbeiten der fünften Daten über die Datenverarbeitungsschicht Folgendes umfasst:
Durchführen von mindestens einem der folgenden Schritte über die Datenverarbeitungsschicht: Routing und Weiterleitung der fünften Daten, Erfassung der fünften Daten, Vorverarbeitung der fünften Daten, Speicherung der fünften Daten, Quellenverfolgung der fünften Daten, gemeinsame Nutzung oder Transaktion der fünften Daten, Analyse der fünften Daten oder Datenformatbestätigung der fünften Daten, Parsen und Wiederzusammensetzen eines Headers der fünften Daten, statistische Informationsberichterstattung, Vorantreiben und Aktualisieren einer Datenschutztechnologie oder Mapping zwischen einer Datendienstaufgabe und einem Funkträger.

6. Verfahren nach einem der Ansprüche 4 bis 5, wobei eine Funkverbindungssteuerungsschicht, RLC-Schicht, und eine Medienzugriffssteuerungsschicht, MAC-Schicht, ferner in der zweiten Kommunikationsvorrichtung eingesetzt sind, und das Verarbeiten der dritten Daten über mindestens die PHY-Schicht, um vierte Daten zu erlangen, Folgendes umfasst:
Verarbeiten der dritten Daten über die PHY-Schicht, die MAC-Schicht und die RLC-Schicht, um die vierten Daten zu erlangen.

7. Kommunikationsvorrichtung (1500, 1600, 1800), wobei die Vorrichtung (1500, 1600, 1800) einen Prozessor (1520, 1610, 1802) umfasst, der Prozessor (1520, 1610, 1802) mit einem Speicher (1620, 1803) gekoppelt ist, und der Speicher (1620, 1803) Anweisungen speichert; und, wenn die Anweisungen durch den Prozessor (1520, 1610, 1802) ausgeführt werden, der Prozessor (1520, 1610, 1802) in die Lage versetzt wird, das Verfahren nach einem der Ansprüche 1 bis 6 durchzuführen.

8. Computerlesbares Speichermedium, wobei das computerlesbare Speichermedium dazu konfiguriert ist, ein Computerprogramm zu speichern; und, wenn das Computerprogramm auf einem Computer ausgeführt wird, der Computer in die Lage versetzt wird, das Verfahren nach einem der Ansprüche 1 bis 6 durchzuführen.

9. Computerprogrammprodukt, wobei das Computerprogrammprodukt einen Computerprogrammcode umfasst; und, wenn der Computerprogrammcode ausgeführt wird, das Verfahren nach einem der Ansprüche 1 bis 6 implementiert wird.

## Revendications

1. Procédé de communication, appliqué à un premier appareil de communication, dans lequel une couche de protocole de convergence de données par paquets, PDCP, et une couche de traitement de données sont déployées dans le premier appareil de communication, et le procédé comprend :
la réception (étape 1201) de premières données, dans lequel les premières données appartiennent aux données du plan de données ;
le traitement (étape 1202) des premières données par l'intermédiaire de la couche de traitement de données, pour obtenir des deuxièmes données ;
l'envoi des deuxièmes données à la couche PDCP par l'intermédiaire de la couche de traitement de données ; et
l'envoi (étape 1203) de troisièmes données, dans lequel les troisièmes données sont obtenues en traitant les deuxièmes données par l'intermédiaire au moins de la couche PDCP ; dans lequel le traitement des premières données par l'intermédiaire de la couche de traitement des données comprend :
la réalisation, par l'intermédiaire de la couche de traitement de données, d'au moins l'une des opérations suivantes : le routage et l'acheminement des premières données, l'acquisition des premières données, le prétraitement des premières données, le stockage des premières données, le traçage de source des premières données, le partage ou la transaction des premières données, l'analyse des premières données ou la confirmation du format des premières données, l'analyse et le réassemblage d'un en-tête des premières données, la création de rapports d'informations statistiques, la poussée et la mise à jour d'une technologie de protection des données, le mappage entre une tâche de service de données et un support radio, ou la compression des paquets de données ou la préservation de la confidentialité des premières données ; ou
la réalisation, par l'intermédiaire de la couche de traitement de données, d'au moins l'une des opérations suivantes : le routage et l'acheminement des premières données, l'acquisition des premières données, le prétraitement des premières données, le stockage des premières données, le traçage de source des premières données, le partage ou la transaction des premières données, l'analyse des premières données ou la confirmation du format des premières données, l'analyse et le réassemblage d'un en-tête des premières données, la création de rapports d'informations statistiques, la poussée et la mise à jour d'une technologie de protection des données, ou le mappage entre une tâche de service de données et un support radio, et au moins la compression ou la préservation de la confidentialité est réalisée sur les deuxièmes données par l'intermédiaire de la couche PDCP ; ou
la réalisation, par l'intermédiaire de la couche de traitement de données, d'au moins l'une des opérations suivantes : le routage et l'acheminement des premières données, l'acquisition des premières données, le prétraitement des premières données, le stockage des premières données, le traçage de source des premières données, le partage ou la transaction des premières données, l'analyse des premières données ou la confirmation du format des premières données, l'analyse et le réassemblage d'un en-tête de premières données, la création de rapports d'informations statistiques, ou la poussée et la mise à jour d'une technologie de protection des données ; et
**caractérisé en ce que**
une couche de protocole d'adaptation des données de service, SDAP, est en outre déployée dans le premier appareil de communication, la couche SDAP est située sous la couche de traitement de données et au-dessus de la couche PDCP, et le procédé comprend en outre :
la réalisation d'un mappage entre une tâche de service de données et un support radio par l'intermédiaire de la couche SDAP ; et l'envoi, par l'intermédiaire de la couche SDAP, des deuxièmes données obtenues par traitement par l'intermédiaire de la couche SDAP à la couche PDCP.

2. Procédé selon la revendication 1, dans lequel le procédé comprend en outre :
la réalisation au moins d'une compression ou d'une préservation de la confidentialité sur les deuxièmes données par l'intermédiaire de la couche PDCP.

3. Procédé selon la revendication 1, dans lequel une couche de contrôle de liaison radio, RLC, une couche de contrôle d'accès au support, MAC, et une couche physique sont en outre déployées dans le premier appareil de communication, et les troisièmes données sont obtenues en traitant les deuxièmes données par l'intermédiaire au moins de la couche PDCP, comprend :
les troisièmes données sont obtenues en traitant les deuxièmes données par l'intermédiaire de la couche PDCP, la couche RLC, la couche MAC et la couche physique, ou les troisièmes données sont obtenues en traitant les deuxièmes données par l'intermédiaire de la couche SDAP, la couche PDCP, la couche RLC, la couche MAC et la couche physique.

4. Procédé de communication, appliqué à un second appareil de communication, dans lequel une couche de protocole de convergence de données par paquets, PDCP, une couche de traitement de données et une couche physique, PHY, sont déployés dans le second appareil de communication, et le procédé comprend :
la réception (étape 1204) de troisièmes données et le traitement des troisièmes données au moins par l'intermédiaire de la couche PHY pour obtenir des quatrièmes données ;
le traitement (étape 1205) des quatrièmes données par l'intermédiaire de la couche PDCP, pour obtenir des cinquièmes données ;
l'envoi (étape 1206) des cinquièmes données à la couche de traitement de données par l'intermédiaire de la couche PDCP ; et
le traitement (étape 1207) des cinquièmes données par l'intermédiaire de la couche de traitement de données ;
dans lequel le traitement des cinquièmes données par l'intermédiaire de la couche de traitement de données comprend :
la réalisation, par l'intermédiaire de la couche de traitement de données, d'au moins l'une des opérations suivantes : le routage et l'acheminement des cinquièmes données, l'acquisition des cinquièmes données, le prétraitement des cinquièmes données, le stockage des cinquièmes données, le traçage de source des cinquièmes données, le partage ou la transaction des cinquièmes données, l'analyse des cinquièmes données ou la confirmation du format des cinquièmes données, l'analyse et le réassemblage d'un en-tête des cinquièmes données, la création de rapports d'informations statistiques, la poussée et la mise à jour d'une technologie de protection des données, le mappage entre une tâche de service de données et un support radio, ou au moins la compression ou la préservation de la confidentialité sur les cinquièmes données ; ou
la réalisation, par l'intermédiaire de la couche de traitement de données, d'au moins l'une des opérations suivantes : le routage et l'acheminement des cinquièmes données, l'acquisition des cinquièmes données, le prétraitement des cinquièmes données, le stockage des cinquièmes données, le traçage de source des cinquièmes données, le partage ou la transaction des cinquièmes données, l'analyse des cinquièmes données ou la confirmation du format des cinquièmes données, l'analyse et le réassemblage d'un en-tête des cinquièmes données, la création de rapports d'informations statistiques, ou la poussée et la mise à jour d'une technologie de protection des données ; et
**caractérisé en ce que**
une couche de protocole d'adaptation des données de service, SDAP, est en outre déployée dans le second appareil de communication, la couche SDAP est située sous la couche de traitement de données et au-dessus de la couche PDCP, et le procédé comprend en outre :
la réalisation d'un mappage entre une tâche de service de données et un support radio par l'intermédiaire de la couche SDAP.

5. Procédé selon la revendication 4, dans lequel le traitement des quatrièmes données par l'intermédiaire de la couche PDCP comprend :
la réalisation au moins d'une compression ou d'une préservation de la confidentialité sur les quatrièmes données par l'intermédiaire de la couche PDCP ; et
le traitement des cinquièmes données par l'intermédiaire de la couche de traitement de données comprend :
la réalisation, par l'intermédiaire de la couche de traitement de données, d'au moins l'une des opérations suivantes : le routage et l'acheminement des cinquièmes données, l'acquisition des cinquièmes données, le prétraitement des cinquièmes données, le stockage des cinquièmes données, le traçage de source des cinquièmes données, le partage ou la transaction des cinquièmes données, l'analyse des cinquièmes données ou la confirmation du format des cinquièmes données, l'analyse et le réassemblage d'un en-tête des cinquièmes données, la création de rapports d'informations statistiques, la poussée et la mise à jour d'une technologie de protection des données, ou le mappage entre une tâche de service de données et un support radio.

6. Procédé selon l'une quelconque des revendications 4 à 5, dans lequel une couche de contrôle de liaison radio, RLC, et une couche de contrôle d'accès au support, MAC, sont en outre déployées dans le second appareil de communication, et le traitement des troisièmes données par l'intermédiaire au moins la couche physique, PHY, pour obtenir les quatrièmes données comprend :
le traitement des troisièmes données par l'intermédiaire de la couche PHY, la couche MAC et la couche RLC, pour obtenir les quatrièmes données.

7. Appareil de communication (1500, 1600, 1800), dans lequel l'appareil (1500, 1600, 1800) comprend un processeur (1520, 1610, 1802), le processeur (1520, 1610, 1802) est couplé à une mémoire (1620, 1803), et la mémoire (1620, 1803) stocke des instructions ; et lorsque les instructions sont exécutées par le processeur (1520, 1610, 1802), le processeur (1520, 1610, 1802) est en mesure de réaliser le procédé selon l'une quelconque des revendications 1 à 6.

8. Support de stockage lisible par ordinateur, dans lequel le support de stockage lisible par ordinateur est configuré pour stocker un programme informatique ; et lorsque le programme informatique est exécuté sur un ordinateur, l'ordinateur est en mesure de réaliser le procédé selon l'une quelconque des revendications 1 à 6.

9. Produit de programme informatique, dans lequel le produit de programme informatique comprend un code de programme informatique ; et lorsque le code de programme informatique est exécuté, le procédé selon l'une quelconque des revendications 1 à 6 est mis en œuvre.
